# EUROPEAN PATENT SPECIFICATION

(11) **EP 3 862 209 B1**
(45) Date of publication and mention of the grant of the patent: **07.06.2023**
(21) Application number: 20156436.6
(22) Date of filing: 10.02.2020
(51) Int. Cl.: B60K 35/00

(54) **DISPLAY DEVICE WITH FUNCTIONAL ELEMENTS AND METHOD FOR PRODUCING SUCH A DISPLAY DEVICE**
ANZEIGEVORRICHTUNG MIT FUNKTIONSELEMENTEN UND VERFAHREN ZUR HERSTELLUNG EINER SOLCHEN ANZEIGEVORRICHTUNG
DISPOSITIF D'AFFICHAGE DOTÉ D'ÉLÉMENTS FONCTIONNELS ET PROCÉDÉ DE PRODUCTION D'UN TEL DISPOSITIF D'AFFICHAGE

(43) Date of publication of application: 11.08.2021
(73) Proprietor: Smart Coloring GmbH, 52074 Aachen (DE)
(72) Inventor: ROBERTZ, Bernd, 52074 Aachen (DE)
(74) Representative: Michalski Hüttermann & Partner Patentanwälte mbB

(56) References cited:
- DE-A1-102005 011 180
- DE-A1-102013 223 247
- DE-A1-102015 011 413

## Description

The invention relates to a display device with functional elements. The invention further relates to a method for producing a display device with functional elements.

Display devices having functional elements which are illuminable by a light source that may be placed behind the display device are widely used in vehicles.

EP 1 034 965 B1 describes display units, having a display front, which is provided with signs having a transparent portion and a substantially opaque portion enclosed by the transparent portion, and which has a light source arranged behind the display front for illumination in the transmitted light method.

DE 10 2013 223247 A1 describes a display device for a vehicle comprising a translucent plastic film which has an opaque coating, wherein a symbol area for a symbol to be displayed by the display device is covered by the opaque coating is recessed, an opaque intermediate component which is applied to the opaque coating outside of the symbol area and surrounding the symbol area and forms a light space adjoining the symbol area, and a diffusing element which is applied to the opaque coating and the symbol area within the light space and is designed to convert light incident on the diffusing element into a diffuse light to illuminate the symbol area.

DE 10 2015 011413 A1 relates to an operating device of a motor vehicle with a component which has at least one illuminated symbol. The component has a light-transmissive and/or light-conducting base body with a front side that faces the outside of the operating device and a back side that faces an interior space of the operating device.

DE 10 2005 011180 A1 describes plastic moldings with two-dimensional or three-dimensional image structures produced on the inside by internal laser engraving. The plastic moldings consist of plastic materials containing nanoscale metal oxides with particle sizes of 1 to 500 nm, with both the plastic material and the metal oxide contained being transparent to the laser light used to generate the image structures.

The functional elements may be symbols that provide certain information content to the driver in specific situation, e.g. the refueling indicator. Hence there is the need that these functional elements should only be visible to the driver in the specific situation, e.g. if the fuel tank reaches a critical filling level. However, in cases when there are several functional elements on the display device there may be stray light contamination of neighboring functional elements. Hence, not only the functional element that shall be illuminated is visible for the user but also the neighboring functional element.

Furthermore, many car manufacturers manufacture their vehicles with full equipment independent of the specific model in the model range, as this is cheaper than equipping vehicles individually for each model in the model range. These equipment parts may be activated at a later date for a fee. In order for this to go unnoticed by the customer, light contamination of non-activated functional elements should be avoided.

In view of the aforementioned prior art, it is an object of the invention to provide means for reducing light scattering between separate arranged functional elements.

According to the invention a solution for this problem is achieved by a display device having the features of independent claim 1. Preferred embodiments are defined by the features of the dependent claims.

Furthermore, this object is solved by the method for producing the above display device having the features of independent claim 26. Preferred embodiments are defined by the features of the dependent claims.

Provided is a display device with illuminable functional elements comprising: at least one functional layer, at least one rear support layer, and at least one light barrier element, wherein the functional layer is next to the rear support layer, wherein an upper surface of the rear support layer is opposite to a lower surface of the rear support layer and contacts a lower surface of the functional layer, wherein the functional layer comprises at least two functional elements, that are light-transmissive for visible light and are illuminable by at least one light source, wherein the rear support layer is light-transmissive for visible light, the rear support layer comprises at least one light barrier element, wherein the light barrier element comprises a pigment and is formed in the rear support layer, such that the pigment exists as particle in the material of the rear support layer and/or wherein the light barrier element comprises inclusions of a gas, preferably in form of bubbles, and is formed in the rear support layer, wherein the light barrier extends essentially vertically - i.e. with an angle of 90° +/- 50% - in the rear support layer and is arranged between of at least two superposed functional elements of the superposed functional layer, wherein the light barrier element arrange in the rear support layer at least partly surrounds spaced apart the at least one superposed functional element, and wherein the light barrier element is adapted for reducing or preventing light scattering through the light barrier element.

According to a first possibility the light barrier element comprises the pigment and is formed in the rear support layer, such that the pigment exists as particle in the material of the rear support layer. The term pigment means in the context of the invention a substance, that is insoluble in the material of the rear support layer. Accordingly, the pigment primarily exists in the material of the rear support layer as particles or agglomerates. Preferably at least 90 % of the pigment-molecules exist in the form of particles or agglomerates in the material of the rear support layer. In contrast to pigments, a dye would be molecularly solved in the material of the rear support layer.

According to a second possibility the light barrier element comprises inclusions of a gas, preferably in form of bubbles, and is formed in the rear support layer. The term inclusions of a gas means in the context of the invention that the light barrier element comprises regions - i.e. the inclusions - where no solid material is present but instead these regions are filled with a gas. Preferably, the inclusions have the shape of a sphere or a bubble. The individual bubbles or inclusions can have a size of a few nm up to mm. The size distribution can be narrow or even very wide. Therefore, the diameter of the individual inclusions and/or bubbles may preferably be below 1 mm, more preferably in the range of 0,0001 mm to 0,5 mm.

Preferably the inclusions have sizes such that a line is not perceived as a collection of individual inclusions, but as a continuous straight line composed of a large number of small inclusions that cannot be resolved by the human eye.

The two possibilities of the light barrier element are not mutually exclusive. Hence, it may be possible that the light barrier element comprises the pigment and the inclusions of the gas.

In both cases it is preferably the case that the particles of pigment and the inclusions of gas have the same size or are larger than the wavelength of light used for the display device to illuminate the functional elements.

According to one embodiment a display device with illuminable functional elements is provided comprising: at least one front layer, at least one functional layer, at least one rear support layer, and at least one light barrier element, wherein the functional layer is sandwiched between the front layer and the rear support layer, wherein an upper surface of the rear support layer is opposite to a lower surface of the rear support layer and contacts a lower surface of the functional layer, wherein an upper surface of the functional layer contacts a lower surface of the front layer, wherein the functional layer comprises at least two functional elements, that are light-transmissive for visible light and are illuminable by at least one light source, wherein the rear support layer is light-transmissive for visible light, wherein the rear support layer comprises at least one light barrier element, wherein the light barrier element comprises a pigment and is formed in the rear support layer, such that the pigment exists as particle in the material of the rear support layer and/or wherein the light barrier element comprises inclusions of a gas, preferably in form of bubbles, and is formed in the rear support layer, wherein the light barrier extends essentially vertically in the rear support layer and is arranged between of at least two superposed functional elements of the superposed functional layer, wherein the light barrier element arranged in the rear support layer at least partly surrounds spaced apart at least one superposed functional element, and wherein the light barrier element is adapted for reducing or preventing light scattering through the light barrier element.

According to one embodiment a display device with illuminable functional elements is provided comprising: at least one front layer, at least one functional layer, at least one rear support layer, and at least one light barrier element, wherein the functional layer is sandwiched between the front layer and the rear support layer, wherein an upper surface of the rear support layer is opposite to a lower surface of the rear support layer and contacts a lower surface of the functional layer, wherein an upper surface of the functional layer contacts a lower surface of the front layer, wherein the functional layer comprises at least two functional elements, that are light-transmissive for visible light and are illuminable by at least one light source, wherein the front layer is of a transparent material so that the illuminable functional elements are visible through the front layer for a user when illuminated, wherein the rear support layer is light-transmissive for visible light, wherein the rear support layer comprises at least one light barrier element, wherein the light barrier element comprises a pigment and is formed in the rear support layer, such that the pigment exists as particle in the material of the rear support layer and/or wherein the light barrier element comprises inclusions of a gas, preferably in form of bubbles, and is formed in the rear support layer, wherein the light barrier extends essentially vertically in the rear support layer and is arranged between of at least two superposed functional elements of the superposed functional layer, wherein the light barrier element arranged in the rear support layer at least partly surrounds spaced apart the at least one superposed functional element, and wherein the light barrier element is adapted for reducing or preventing light scattering through the light barrier element.

According to another embodiment a display device with illuminable functional elements is provided comprising: at least one front layer, at least one functional layer, at least one rear support layer, and at least one light barrier element, wherein the functional layer is sandwiched between the front layer and the rear support layer, wherein an upper surface of the rear support layer is opposite to a lower surface of the rear support layer and contacts a lower surface of the functional layer, wherein an upper surface of the functional layer contacts a lower surface of the front layer, wherein the functional layer comprises at least two functional elements, that are light-transmissive for visible light and are illuminable by at least one light source, wherein the front layer is of a transparent material so that the illuminable functional elements are visible through the front layer for a user, wherein the rear support layer is light-transmissive for visible light, wherein the rear support layer comprises at least one light barrier element, wherein the light barrier element comprises a pigment and is formed in the rear support layer, such that the pigment exists as particle in the material of the rear support layer and/or wherein the light barrier element comprises inclusions of a gas, preferably in form of bubbles, and is formed in the rear support layer, wherein the light barrier extends essentially vertically in the rear support layer and is arranged between of at least two superposed functional elements of the superposed functional layer, wherein the light barrier element arranged in the rear support layer at least partly surrounds spaced apart at least one superposed functional element, wherein the light barrier element and the rear support layer are a one-piece component.

The main idea is to have a display device with several layers -functional layer, rear support layer, and optionally a front layer - and to have a light barrier element, which comprises the pigment and/or the inclusions of a gas, in and/or within the rear support layer. The functional elements in the functional layer are light-transmissive for visible light and are illuminable by a light source. The functional elements and/or the functional layer may be colored. The term "functional element" means in the context of the invention a specific region of the functional layer that has a different light transmittance than the region of the functional layer surrounding the specific region of the functional layer. For example, the region of the functional layer surrounding the functional element may have a different color than the functional element. Hence, during day the functional elements are easily visible due to the color difference. At night the functional elements may be illuminated to provide visibility without glare. Alternatively, the functional elements may appear to the user to have the same color as the region of the functional layer surrounding the functional elements. In this case, during day the user may not be aware of the existence of the functional element. However, even though the functional element appears to the user to have the same color as the region surrounding the functional element, the light transmittance of the functional element is preferably different compared to the light transmittance of the region of the functional layer surrounding the functional element. Hence, after activation of the functional element or after activation of a feature symbolized by the functional element, the functional element may get visible to the user due to illumination of the functional element. Such a design is often called day-night design. For illumination of the functional elements a light source may be installed behind the display device. Furthermore, the rear support layer is transparent, semi-transparent, or translucent for visible light to facilitate the illumination of the functional elements.

Even though it may be often the case that - from a perspective of a user of the display device - that the functional layer is the foremost layer or in case there is a front layer that the front layer is the foremost layer and that the rear support layer is - from the perspective of the user - behind the functional layer or front layer, it is also possible that the rear support layer is the foremost layer, and the functional layer and optionally front layer are behind the rear support layer.

Furthermore, it may also be the case, that the display device comprises additional layers. Furthermore, the additional layers may have a light barrier element or may be without a light barrier element.

As already mentioned, the functional element is a specific region of the functional layer that has a different light transmittance than the region of the functional layer surrounding the specific region of the functional layer. The functional element may be generated by using different coloring agents for the specific region of the functional layer than for the rest of the functional layer. The functional element may have the form of a symbol or a letter to provide certain information content to the driver in specific situation, for example the form of a refueling indicator. Preferably, the functional element may have a higher light transmittance than the region of the functional layer surrounding the functional element. The functional element itself may also include several regions having higher and/or lower light transmittance than the region of the functional layer surrounding the functional element. More preferably, the region of the functional layer surrounding the functional element may have a light transmittance close to zero. In other words, the region of the functional layer surrounding the functional element may be optically dense.

The term "transparent" as well as "light-transmissive " means in the context of the invention that the rear support layer has at least a light transmittance for visible light that is ≥ 10 %, preferably ≥ 50% and more preferably ≥ 75%. Even more preferably, the rear support layer has at least a light transmittance for light with a wavelength between 380 nm to 750 nm that is ≥ 10%, preferably ≥ 50% and more preferably ≥ 75%. Moreover, in the context of the invention the term means that the front layer has at least a light transmittance for visible light that is ≥ 10%, preferably ≥ 50% and more preferably ≥ 75%. Even more preferably, the rear support layer has at least a light transmittance for light with a wavelength between 380 nm to 750 nm that is ≥ 10%, preferably ≥ 50% and more preferably ≥ 75%. To prevent or reduce stray light contamination of neighboring functional elements, the rear support layer comprises at least one light barrier element that is adapted for reducing or preventing light scattering through the light barrier element. Being adapted for reducing or preventing light scattering through the light barrier element may mean that the light barrier element absorbs or reflects light. In other words, the light barrier element is less light-transmissive than the rear support layer. Preferably, the light barrier element has a low transmittance of light through the light barrier. More preferably the light barrier element has a light transmittance for visible light that is ≤ 75%, preferably ≤ 10%. Even more preferably, the light barrier element has a light transmittance for light with a wavelength between 380 nm to 750 nm that that is ≤ 25%, preferably ≤ 10%.

Furthermore, a display device may be provided, wherein the light transmission in the range of 380 nm to 750 nm of the light barrier element is at least 2 times, preferably at least 100 times less compared with the light transmission in the range of 380 nm to 750 nm of the rear support layer, based on the same path length.

The light transmittance for visible light for the rear support layer, the front layer and the light barrier element may be determined according to the DIN 1349 (Transmisson of optical radiation; optical clear (nonscattering) media, quantities, symbols and units). Preferably, the transmittance of the front layer and the rear support layer is determined with UV-VIS spectroscopy across a path length of 1 cm of the rear support layer and/or the front layer. More preferably, the transmittance of the light barrier element is determined with UV-VIS spectroscopy across a path length of 1 mm of the light barrier element. Further preferably, the wavelength for determining the transmittance is 532 nm, more preferably the wavelength for determining the transmittance corresponds to the wavelength of the light source used to illuminate the functional element.

The light barrier element is formed in the rear support layer and arranged in the rear support layer, such that it extends essentially in the rear support layer. Essentially vertically may mean that the light barrier element extends parallel to a normal vector of the lower surface in the lower surface of the rear support layer. It is possible that the light barrier element extends essentially vertically from the lower surface of the rear support layer into the rear support layer. It is also possible that the light barrier element extents essentially vertically within the rear support layer and does not start at the lower surface of the rear support layer. Further, the light barrier element may extend more into the vertical direction as it extends into a direction perpendicular to the vertical direction. Further, the light barrier element may extend in the rear support layer with an angle of 90° +/- 50%. Furthermore, the light barrier element may have certain thickness orthogonal to its vertical extent. The thickness of the light barrier element depends amongst others on the strength of the light to be shielded. For example, the thickness can be 5 to 50 times smaller than the vertical extent of the light barrier element, but its thickness can also be adapted to the requirements of the light shielding and widened accordingly. In extreme cases, the thickness of the light barrier element can thus be greater than the vertical extent. Another factor that determines the required thickness of the light barrier element is the achievable optical density and thus the absorption or shielding capacity of the light barrier element. A high density of inclusions or bubbles results in a high optical density and vice versa. In summary, the required thickness of the light barrier element mainly depends on the light source used, the optical density of inclusions and bubbles and the desired absorption (shielding).

Therefore, it can also happen that the surface spread (dimension) of the pigments and/or bubbles is bigger than the vertical extent, e.g. from a perspective of looking on the rear support layer a wide line may be seen. This may become necessary if high absorption is required for the safe shielding of the light and a thin line is not sufficient for this.

The thickness of the light barrier element may be constant. For example, the thickness of the light barrier element near the upper surface of the rear support layer may be essentially the same (+/-25%) as the thickness of the light barrier element further away from the upper surface of the rear support layer. Alternatively, the thickness of the light barrier element may vary. The causes for possible deviations and appropriate countermeasures are discussed below. Furthermore, the light barrier element is arranged between of at least two superposed functional elements of the superposed functional layer and the light barrier element at least partly surrounds spaced apart the at least one superposed functional element for effective prevention of stray light contamination. Therefore, the display device has no or significant reduced light scattering between the separate arranged and illuminable functional elements.

For example, when the display device is viewed from the perspective of a user sitting in front of the front layer, the light barrier element may completely or partially surround the functional element. The light barrier element may have the form of a straight line in between the two functional elements. The light barrier element may also have the form of a circle, semi-circle or segment of a circle. The light barrier element may also have the form of a "H", "U", "I", or "L". Any other forms are possible. It may be possible that every functional element is surrounded or partially surrounded by a light barrier element. It may also be possible that one light barrier element may be formed as a grid, and in some or all of the cells of the grid there may be a functional element. Therefore, the light barrier element may also have the function of a light guide.

In addition to the function as a light barrier or light guide, further graphic design possibilities arise when the pigments or bubbles are distributed over a large area of the rear support layer. For example, structures can be applied that become visible from the front side when the functional element is backlit, such as alternating light/dark fields similar to a chessboard or a color gradient, so that different brightness levels can be generated in the functional element with one light source. Here, too, the surface spread of the pigments and/or bubbles is greater than the vertical extent.

If the display device is viewed from a perspective orthogonal to the perspective of the user, such that the layered structure of the display device is apparent, the light barrier element extends basically vertically in the rear support layer and is arranged between two superposed functional elements of the superposed functional layer. It may be possible that the light barrier element starts at the lower surface of the rear support layer and extends such far into the rear support layer that its vertical extent essentially corresponds to the thickness of the rear support layer. In other words, the light barrier element may reach through the rear support layer. It may also be possible that the vertical extent of the light barrier element is smaller than the thickness of the rear support layer. In this case the light barrier element may start at the lower surface of the rear support layer or the light barrier element may start within the rear support layer. Furthermore, in this case the light barrier element may extend essentially vertically in the rear support layer and may end in the rear support layer.

According to a preferred embodiment the display device may comprise at least one light source, wherein the light source is arranged below the rear support layer and is positioned below at least one functional element, such that light emitted by the light source substantially illuminates the at least one functional element or wherein the display device comprises at least one light source, wherein the light source is arranged above the functional layer, and/or in case the display device comprises a front layer above the front layer, and is positioned above at least one functional element, such that light emitted by the light source substantially illuminates the at least one functional element. The light source may emit a beam of light that may be directed towards the functional element. Due to the light barrier element in the display device, light scattering to another functional element is prevented or reduced.

With respect to an effective reduction or prevention of stray light contamination of neighboring functional elements, the light barrier element may absorb light in a wavelength that essentially corresponds to a wavelength of the light emitted by the light source or the light barrier element may reflect light in a wavelength that essentially corresponds to a wavelength of the light emitted by the light source. In other words, there may be two ways to achieve an effective reduction or prevention of light scattering to another functional element. One possibility is to use a light barrier element that absorbs the light emitted by the light source. For example, the pigment in the light barrier element may absorb the light emitted by the light source. Preferably a dark pigment, for example black, may be used as pigment for the light barrier element. More preferably a light barrier element with a high absorption cross section may be used. The light absorbed by the light barrier element may be dissipated to heat. Alternatively, the light absorbed by the light barrier element may be transformed into light with a different wavelength and emitted. Another possibility is to use a light barrier element that reflects the light emitted by the light source. For example, the inclusions of a gas, preferably in form of bubbles, in the light barrier element may reflect the light emitted by the light source, due to the phase boundary between the solid material of the light barrier and/or rear support layer and the gas in the inclusions. In this case, compared to an absorptive light barrier element, a light source with a lower luminous intensity may be used, since essentially none of the light is absorbed by the light barrier. In this case, the light barrier element may have the function of a light guide. Preferably, a light barrier element with a high scattering cross section may be used. In both cases the light barrier element reduces or prevents light from traveling through the light barrier element i.e. the light barrier element may have a higher extinction cross section than the rear support layer.

According to the above a display device may be provided, wherein the light barrier element is less translucent than the rear support layer, and/or the light barrier element absorbs more light in a wavelength that essentially corresponds to a wavelength of the light emitted by the light source compared to the rear support layer, and/or the light barrier element reflects more light in a wavelength that essentially corresponds to a wavelength of the light emitted by the light source compared to the rear support layer.

It may also be possible that there is one light source or a view light sources arranged below the rear support layer or above the front layer and/or functional layer. However, according to a preferred embodiment, the display device may comprise a light source for each functional element. In other words, there may be several light sources, i.e. one light source for each functional element. This embodiment may have the advantage that each functional element may be illuminated individually. This may enhance the freedom of design.

With respect to the light source, the light source may be an LED or OLED light source. These light sources may be low maintenance, may have a high lifetime and low operating costs. Furthermore, LEDs or OLEDs may only produce little waste heat, may be produced in many different forms and layouts, and are inexpensive. They also provide the advantage that the light emitted by LEDs or OLEDs may be narrow-band, meaning that only a small wavelength range may be present. Therefore, the matching of the absorption or reflection spectrum of the light barrier element and the emission spectrum of the light source may be facilitated.

The different layer of the display device may have different thicknesses. According to a preferred embodiment the thickness of the front layer may be ≥ 25 µm to ≤ 40000 µm, preferably ≥ 50 µm to ≤ 10000 µm, and more preferably ≥ 250 µm to ≤ 500 µm.

In this regard the thickness of the functional layer may be ≥ 1 µm to ≤ 350 µm, preferably ≥ 5 µm to ≤ 200 µm, more preferably ≥ 20 µm to ≤ 100 µm.

Furthermore, the thickness of the rear support layer may be ≥ 25 µm to ≤ 40000 µm, preferably ≥ 50 µm to ≤ 20000 µm, more preferably in between ≥ 500 µm to ≤ 10000 µm.

In order to reduce stray light contamination of neighboring functional elements even further the display device may comprise a protrusion element, wherein the protrusion element extends out of the lower surface of the rear support layer and is arranged between of at least two superposed functional elements of the superposed functional layer. Preferably the protrusion element is arranged on the lower surface of the rear support layer and positioned on the light barrier element. When viewed from the user perspective the protrusion element may be formed according to the light barrier element. More preferably the protrusion element may be in between two neighbouring light sources. The protrusion element may be formed of a polymer material. Furthermore, the protrusion element may be formed by an optically dense material. Therefore, the protrusion element may have a higher extinction coefficient than the rear support layer.

Furthermore, a display device may be provided, wherein the thickness of the light barrier in the rear support layer is ≥ 1 µm to ≤ 10.000 µm, preferably ≥ 10 µm to ≤ 5.000 µm, more preferably in between ≥ 50 µm to ≤ 1.000 µm. These values may lead to a more efficient reduction of stray light contamination.

Furthermore, a display device may be provided, wherein the vertical extent of the light barrier element extending vertically into the rear support layer is in between 0,0025% to 100% of the thickness of the rear support layer, and/or ≥ 1 µm, preferably ≥ 100 µm, and more preferably ≥ 250 µm. These values may lead to a more efficient reduction of stray light contamination. Thickness and vertical extent as well as optical density of the light barrier element can be individually adapted to the requirements (such as strength of the light source, shielding to be achieved). It is easy for the expert to decide this.

The display device may be based on a plastic material. According to a preferred embodiment the front layer may comprise a front-layer-support-layer-polymer or mixtures thereof selected from the group comprising polycarbonate (PC), polyethylene terephthalate (PET), polyethylene naphthalate (PEN), polyethylene furanoate (PEF), glycolized or amorphous polyester, glycolized or amorphous polyethylene terephthalate (PET-G or A-PET), polytrimethylenterephthalet (PTT), polybutylenterephtalhat (PBT), poly(methyl methacrylate) (PMMA), polypropylene (PP), polyvinyl chloride (PVC), cellulose triacetate (TCA), polyamide (PA), poly imide (PI) or polyethylene (PE), polyoxymethylene (POM), polystyrene (PS), polyurethane (PU), silicone, and acrylonitrile butadiene styrene (ABS).

Preferably, the front layer may be of a light-transmissive material, which is translucent and/or transparent for visible light. Therefore, the functional layer and/or the functional elements may be visible through the front layer for the user. However, the front layer may still be colored. The front layer may comprise additional components in order to enhance the UV-stability, the scratch resistance, and/or other properties. Furthermore, the front layer may comprise filling material.

The front layer, which is light-transmissive, may be a plastic film used for film insert molding. The plastic film may be based on polycarbonate. Polycarbonates are a group of thermoplastic polymers. Polycarbonates may be strong and resistant and therefore, the front layer may protect the functional layer. Additionally, polycarbonates may be easily worked, molded, and thermoformed, therefore facilitating the production of the display device.

In a preferred embodiment the display device may comprises an anti-scratch layer on an upper surface of the front layer, on an upper surface of the functional layer, or on the lower surface of the rear support layer. The anti-scratch layer may be a lacquer that enhances the lifetime of the display device and makes it more resistant to environmental impacts. Preferably, also the anti-scratch layer is transparent, semi-transparent, or translucent for visible light to allow the visibility of the functional elements for the user. However, it is still possible that the anti-scratch layer is colored. The anti-scratch layer may also be structured to achieve a certain haptic perception, and/or a certain visual appearance e.g. a gloss or haze. In this respect the anti-scratch layer may comprise an anti-scratch layer polymer or mixtures thereof selected from the group comprising acrylic resin, epoxy resins, and polyurethane. The anti-scratch layer polymer may also be cross-linked, or may be cross-linked by exposing the anti-scratch layer polymer to UV-light and/or heat.

According to a further embodiment the light barrier element and the rear support layer may be a one-piece component. A one-piece component may indicate that the light barrier element and the rear support layer are not two separate components. Instead the display device is designed such that the rear support layer contains the light barrier element.

In this context and according to a further embodiment, a display device may be provided, wherein the light barrier element and the rear support layer are of the same material, with the exception that the light barrier element comprises in addition the pigment, so that the transmittance of the light barrier element for light having a wave length of 380 nm to 750 nm is less than the transmittance of the rear support layer for light having a wave length of 380 nm to 750 nm.

With regard to the pigment, a display device may be provided wherein the pigment is carbon black. This has the advantage that carbon black has a high absorption cross section and hence the light barrier element prevents light scattering very efficiently. Having an efficient prevention of light scattering allows to have a low thickness of the light barrier element.

Furthermore, a display device may be provided, wherein the light barrier element and the rear support layer are of the same material, with the exception that the light barrier element comprises in addition the inclusions of a gas, so that the transmittance of the light barrier element for light having a wave length of 380 nm to 750 nm is less than the transmittance of the rear support layer for light having a wave length of 380 nm to 750 nm.

With regard to the inclusions of a gas, a display device may be provided wherein the gas may be any gas or a mixture of any gas. For example, the gas may be CO₂.

According to the above, a display device may be provided wherein the light barrier element and the rear support layer are based on a rear support layer material, wherein the rear support layer material comprises
- a front-layer-support-layer-polymer or mixtures thereof, selected from the group comprising polycarbonate (PC), polyethylene terephthalate (PET), polyethylene naphthalate (PEN), polyethylene furanoate (PEF), glycolized or amorphous polyester (PET-G or A-PET), polytrimethylenterephthalet (PTT), polybutylenterephtalhat (PBT), poly(methyl methacrylate) (PMMA), polypropylene (PP), polyvinyl chloride (PVC), cellulose triacetate (TCA), polyamide (PA), poly imide (PI) or polyethylene (PE), polyoxymethylene (POM), polystyrene (PS), polyurethane (PU), silicone, and acrylonitrile butadiene styrene (ABS)
- optionally a pigment/gas source or mixtures thereof,
- optionally a laser absorber additive or mixtures thereof.

As already mentioned, since the light barrier element and the rear support layer may be a one-piece component, a display device may be provided, wherein the light barrier element is based on the rear support layer material, and in addition comprises the pigment and/or the inclusions of gas or mixtures thereof.

Furthermore, according to a preferred embodiment the light barrier element may be formed by a laser marking process. In this respect a display device may be provided wherein the light barrier element and the rear support layer have been made from a primary rear support layer material of a blank display device not having a light barrier element, wherein the primary rear support layer material comprises
- a front-layer-support-layer-polymer or mixtures thereof, selected from the group comprising polycarbonate (PC), polyethylene terephthalate (PET), polyethylene naphthalate (PEN), polyethylene furanoate (PEF), glycolized or amorphous polyester, glycolized or amorphous polyethylene terephthalate (PET-G or A-PET), polytrimethylenterephthalet (PTT), polybutylenterephtalhat (PBT), poly(methyl methacrylate) (PMMA), polypropylene (PP), polyvinyl chloride (PVC), cellulose triacetate (TCA), polyamide (PA), poly imide (PI) or polyethylene (PE), polyoxymethylene (POM), polystyrene (PS), polyurethane (PU), silicone, and acrylonitrile butadiene styrene (ABS)
- optionally a laser absorber additive or mixtures thereof,
   and
- optionally a pigment/gas source or mixtures thereof.

Specifically, the primary rear support layer material may comprise
- 0-5 %wt, preferably 0,0002 - 4 %wt, more preferably 0,0005 - 3 %wt of the laser absorber additive,
- 0-5 %wt, preferably 1-4 %wt, more preferably 2-3 %wt of the pigment/gas source, and
- 90-100 %wt, preferably 92-98 %wt, more preferably 94-96 %wt of the front-layer support layer polymer.

Without being bound to a specific theory it is believed that the light barrier element and specifically the pigment and/or the inclusions of a gas are formed in the laser marking process. It may be possible that the pigment and/or gas is generated in the laser marking process without the addition of the pigment/gas source. In this case, the front-layer-support-layer-polymer or mixtures thereof of the primary rear support layer material may be the source for the pigment and/or gas itself. In this case no additional pigment/gas source is necessary for generating the light barrier element.

However, it may also be possible that the front-layer-support-layer polymer is no good source for the pigment, e.g. the front-layer-support-layer polymer is not easily pyrolyzed and/or carbonized for generating the pigment, or it may be possible that the front-layer-support-layer polymer is no good source for a gas, e.g. the front-layer-support-layer polymer is not easily gasified for generating a gas. In these cases, a better result, i.e. a light barrier element with a higher extinction cross section may be achieved by using an additional pigment/gas source.

Furthermore, in order to generate the light barrier element by the laser marking process, the primary rear support layer material may need to absorb energy from the laser used for the laser marking process. Some front-layer-support-layer-polymers or mixtures thereof may already have an absorption coefficient high enough in the wavelength of the laser used for laser marking and thus no laser absorber additive may be needed for generating the light barrier element. However, a laser absorber additive may be added to achieve better results with regard to processing speed of the laser marking process, contrast and/or edge sharpness of the light barrier element, and/or extinction cross section of the light barrier element or for some front-layer-support-layer-polymers or mixtures to generate a light barrier element at all. To be able to mark the rear support layer efficiently, it is necessary to create a sufficient interaction between the material of the rear support layer and the laser light. To increase the interaction of the laser light with the material of the rear support layer, the material of the rear support layer may comprise the laser absorber additive. The laser absorber additive can be laser-markable polymers, metals, pearlescent pigments or metal effect pigments. In the case of metals, pearlescent pigments and metal effect pigments, these pigments are heated by the irradiation of laser light. In the immediate vicinity of the metals, pearlescent pigments and metal effect pigments, a thermal change of the material of the rear support layer occurs, e.g. carbonization or foaming of the front-layer-support layer polymer, which results in generation of the light barrier element. Preferably, good laser marking or good contrast should be obtained without the use or minimum use of laser absorber additive to avoid discoloration or clouding of the rear support layer.

Furthermore, it may be possible to achieve better results in creating the light barrier element, when a laser additive comprising a laser absorber additive and a pigment/gas source may be used. Alternatively, the laser absorber additive and the pigment/gas source are preprocessed before they are mixed with the front-layer-support-layer-polymer or mixtures thereof. For example, by generating a compound particle, comprising a laser absorber additive that is surrounded by a pigment/gas source, better results in generating the light barrier element may be achieved. As explained already, when the laser light is absorbed by the laser absorber additive the absorbed energy may be used to pyrolyze, carbonize, and/or gasify the pigment/gas source that is in the direct surrounding of the laser absorber additive and therefore generating the pigment or gas in the light barrier element.

Preferably, one of the following laser additives may be used: Lazerflair and/or Iriotec from Merck, Maxithen from Gabriel-Chemie, Romira from Rowa Group, MarkLT from Engelhard, Budit from Budenheim, and/or Lifocolor.

### Laser absorber additive or mixture

Furthermore, with regard to the laser absorber additive, the laser absorber additive or mixtures thereof may be further selected from the group comprising: Cu, Ag, Zn, SnO2, Sb2O3, Al2O3, In2O3, SiO2. Furthermore, nanoparticles may be used as laser absorber additive. Preferably the nanoparticles comprise one or more metals, alloys or mixtures thereof.

Metals for use as nanoparticles are preferably selected from aluminum, chrome, zinc, nickel, magnesium, tin, lead, copper, silver, gold, iron, stainless steel, iridium, vanadium, bismuth, cadmium, titanium and platinum or blends thereof.

In principle, the laser absorber additive used for laser marking can have a wide particle size range. However, smaller and spherical particles of the lased absorber additive are preferred as the image sharpness and especially the point accuracy of the laser marking becomes better when using smaller metal particles. The point accuracy deteriorates if even small amounts of too large spherical particles are present.

Point accuracy means a good resolution of the laser marking without interfering isolated particularly large points.

Particularly fine types result in a distinctly high image sharpness, dot accuracy and contrast in laser marking. It is assumed that the use of fine metal particles, due to their high specific surface area, causes the laser light to be absorbed and subsequently emitted into the environment of the metal particle in a specially defined, narrowly localized manner.

In addition to the improved point accuracy, these very fine spherical metal particles also achieve very high writing speeds of the laser. The writing speeds of the laser range from 10 to approx. 20,000 mm/s, preferably from 50 to 15,000 mm/s, particularly preferably from 100 to 11,000 mm/s and very particularly preferably from 200 to 10,000 mm/s. The individual writing speed that can be achieved depends on many parameters, but especially on the laser power and the pulse frequency.

Furthermore, the nanoparticles may comprise a core component and an at least partial coating with a laser absorber additive. The core component may serve as a carrier for the laser absorber additive and remains essentially unaffected by the laser light used in the laser marking process. The core component may comprise glass and/or one or more mineral or synthetic inorganic materials. The core component particularly preferably comprises a layered silicate, in particular mica and/or coated mica, graphite, Al₂O₃, TiO₂, SiO₂, Fe₂O₃ or Bismuth oxychloride (BiOCl).

### Pigment/gas source or mixture

The pigment/gas source or mixture thereof may be further selected from the group comprising:
Polyvinyl alcohol, (PVOH), Polyvinyl butyral (PVB), Fluoropolymers and modified Fluoropolymers as PTFE, FEP, PFA, ETFE, ECTFE, PCTFE, PVDF, preferably PFSA, cellulose and its derivates such as Hydroxyethyl methyl cellulose or Acetyl cellulose. Preferably the molecules pentaerythritol, pentaerythritol dimers and/or pentaerythritol trimers and further oligomers and/or their derivatives such as esters or ethers are used as pigment/gas source. The absorbed laser light used in the laser marking process easily modifies pentaerythritol, pentaerythritol dimers and/or pentaerythritol trimers and/or their derivatives such as esters or ethers to give carbon black as pigment. Hence the light transmittance of the light barrier may be very low. As Pentaerythritol derivative Perstorp Charmor PM 40 may be used.

Further, compounds according to formula C(CH₂OR)₄, wherein R may be H, or wherein R may be a fatty acid moiety comprising 5-8 carbon atoms may be used. The fatty acid moieties can be saturated or unsaturated. R may be also another moiety like ether, amide and/or urethane.

Furthermore, the pigment/gas source may be an ether. Ether may comprise but not limited to compounds that contains at least one ethyleneglycol moiety and at least one fatty acid moiety coupled to the ethyleneglycol moiety.

Examples of compound that contains at least one ethyleneglycol moiety and at least one fatty acid moiety coupled to the polyethyleneglycol moiety include PEG 300-monostearate, PEG 400 monolaurate.

The pigment/gas source may comprise a compound according to the following chemical formula 1: 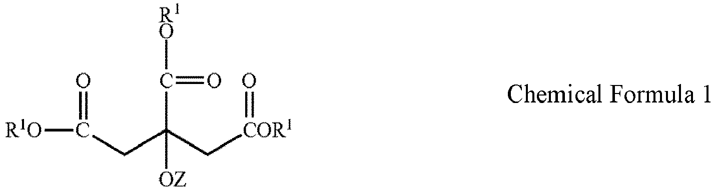 wherein R¹ is an alkyl group comprising 1-20 carbon atoms and Z is hydrogen or a group according to the formula C(O)R², wherein R² is an alkyl group comprising 1-20 carbon atoms. R¹ may be the same or different and is an alkyl group comprising 1-20 carbon atoms, preferably 1-15 carbon atoms, more preferably 1-10 carbon atoms. R² is an alkyl group comprising 1-20 carbon atoms, preferably 1-10 carbon atoms, more preferably 1-5 carbon atoms. Non-limiting examples of the carboxylic acid ester are triethylcitrate, tributylcitrate, trihexylcitrate, acetyltributylcitrate (ATBC; R¹ = C₄H₉, Z = CH₃CO), propanoyltribu-tylcitrate, acetyltrihexylcitrate and butanoyltriethylcitrate.

Furthermore, as pigment/gas source 4-(hydroxymethyl)cyclohexylmethyl-4'-(hydroxymethyl)cyclohexane carboxylate represented by the chemical formula 2, 4,4-(oxybis(methylene)bis) cyclohexane methanol represented by the chemical formula 3, and mixtures thereof may be used:

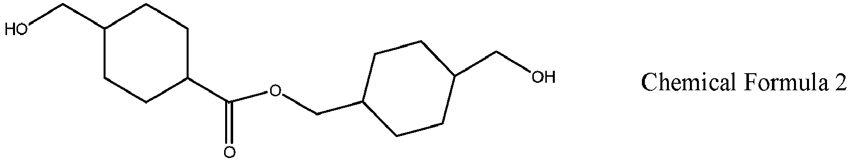

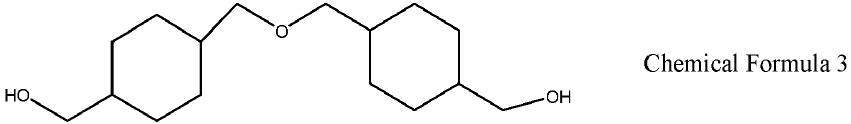

With regard to further advantages and technical features of the display device it is referred to the method for producing a display device, the examples and the further description.

The present invention further relates to the method for producing the above described display device, comprising the steps of
a) providing a blank display device, wherein the blank display device comprises
   at least one functional layer,
   and at least one rear support layer,
   wherein the functional layer is next to the rear support layer,
   wherein an upper surface of the rear support layer is opposite to a lower surface of the rear support layer and contacts a lower surface of the functional layer,
   wherein the functional layer comprises at least two functional elements, that are light-transmissive for visible light and are illuminable by at least one light source,
   wherein the rear support layer is light-transmissive for visible light,
   wherein rear support layer is based on a primary rear support layer material,
b) producing at least one light barrier element in the rear support layer,
   by irradiating a section of the rear support layer where the light barrier element is to be generated by laser light,
   wherein the laser light has a wavelength such that the laser light is at least partially absorbed by the primary rear support layer material.

The laser light may not only be irradiated onto the lower surface of the rear support layer but may also be focused onto a spot within the rear support layer. In other words, the section of the rear support layer where the light barrier element is to be generated may lie within the rear support layer or may extend into the rear support layer and is not limited to the lower surface of the rear support layer. By focusing a spot within the rear support layer, the light barrier element is generated within the rear support layer.

Furthermore, according to a preferred embodiment, the primary rear support layer material of the rear support layer of the blank display device may comprise
- a front-layer-support-layer-polymer or mixtures thereof, selected from the group comprising polycarbonate (PC), polyethylene terephthalate (PET), polyethylene naphthalate (PEN), polyethylene furanoate (PEF), glycolized or amorphous polyester, glycolized or amorphous polyethylene terephthalate (PET-G or A-PET), polytrimethylenterephthalet (PTT), polybutylenterephtalhat (PBT), poly(methyl methacrylate) (PMMA), polypropylene (PP), polyvinyl chloride (PVC), cellulose triacetate (TCA), polyamide (PA), poly imide (PI) or polyethylene (PE), polyoxymethylene (POM), polystyrene (PS), polyurethane (PU), silicone, and acrylonitrile butadiene styrene (ABS)
- optionally a laser absorber additive or mixtures thereof,
   and
- optionally a pigment/gas source or mixtures thereof.

According to a specific embodiment a method may be provided wherein in step a) the primary rear support layer material of the rear support layer of the blank display device may comprise
- 0-5 %wt, preferably 0,0002-4 %wt, more preferably 0,0005-3 %wt of the laser absorber additive,
- 0-5 %wt, preferably 1-4 %wt, more preferably 2-3 %wt of the pigment/gas source, and
- 90-100 %wt, preferably 92-98 %wt, more preferably 94-96 %wt of the front-layer support layer polymer.

Furthermore, according to an embodiment the method may comprise the steps of
a) providing a blank display device, wherein the blank display device comprises
   at least one front layer,
   at least one functional layer, and
   at least one rear support layer,
   wherein the functional layer is sandwiched between the front layer and the rear support layer, wherein an upper surface of the rear support layer is opposite to a lower surface of the rear support layer and contacts a lower surface of the functional layer,
   wherein an upper surface of the functional layer contacts a lower surface of the front layer,
   wherein the functional layer comprises at least two functional elements, that are light-transmissive for visible light and are illuminable by at least one light source,
   wherein the rear support layer is light-transmissive for visible light,
   wherein rear support layer is based on the primary rear support layer material,
b) producing at least one light barrier element in the rear support layer,
   by irradiating a section of the rear support layer where the light barrier element is to be generated by laser light,
   wherein the laser light has a wavelength such that the laser light is at least partially absorbed by the primary rear support layer material.

According to a further embodiment the functional layer and/or the functional elements may be based on a functional layer material, wherein the functional layer material comprises a coloring agent or mixtures thereof. As already mentioned, the functional element is a specific region in the functional layer having a different light transmittance than the functional layer surrounding this specific region. The functional layer and/or the functional element may be based on the functional layer material. The functional layer and/or the functional element may be produced by printing the functional layer material on the front layer and/or on the rear support layer. Preferably a screen-printing process or an intaglio (printmaking) process, inmold labeling (IML) process, inmold decoration (IMD) process, or hot stamping process is used. The functional layer material may comprise the coloring agent or mixtures of different coloring agents. The coloring agents may be based on polyurethane and may be selected from the group comprising Noriphan HRT N, Noriphan HTR N HF, NoriPET, and Noricryl, delivered by the company Pröll GmbH in Germany and/or coloring agents delivered by the company Teikoku Printing Inks Mfg. Co., Ltd in Japan.

The method basically comprises two steps, i.e. providing the blank display device and producing the light barrier element. The blank display device preferably is a display device that comprises all parts except for the light barrier element. The blank display device may be produced by a standard production method.

With regard to the first processing step - providing the blank display device - the blank display device may be produced by film insert molding, in-mold decoration, in-mold labelling, lamination, over-molding, multi-material injection molding, and/or a stacking process of the layers. Any other standard process known for producing the blank display device may be used.

With regard to the second step, i.e. producing the light barrier element, the second step is preferably a laser marking process. A section of the rear support layer where the light barrier element shall be generated is irradiated by laser light, in order to generate the light barrier element.

To facilitate the generation of the light barrier element in the rear support layer, the primary rear support layer material may comprise in addition to the front-layer support layer polymer the laser absorber additive and/or the pigment/gas source.

According to the above a method may be provided wherein in step a) the primary rear support layer material of the rear support layer of the blank display device comprises a laser absorber additive or mixtures thereof and optionally a pigment/gas source or mixtures thereof, and in step b) the laser light has a wavelength such that the laser light is at least partially absorbed by the laser absorber additive.

With regard to the second processing step - producing the light barrier element - a method may be provided, wherein in step b) the irradiating of the section of the rear support layer where the light barrier element is to be generated by laser light comprises focusing laser light from one or more laser sources onto a first spot in the section of the rear support layer where the light barrier element is to be generated.

Preferably the laser light in step b) has a wavelength such that the laser light is at least partially absorbed by the laser absorber additive. Furthermore, the laser light in step b) may have a wavelength where the front-layer support layer polymer in the primary rear support layer material may only have a weak absorption. Preferably the laser light in step b) has a wavelength of 1064 nm, or 532 nm.

Furthermore, the laser light for irradiating the section in the rear support layer might be continuous wave (cw) laser light, or pulsed laser light. In other words, as laser source a laser that produces a continuous output beam (cw-laser) might be used or a q-switched, gain-switched or mode locked laser might be used, which has a pulsed output beam.

In principle, all conventional laser sources are suitable, for example gas lasers and solid-state lasers. Gas lasers are e.g. (the typical wavelength of the emitted radiation is given in brackets): CO₂ lasers (10.6 µm), argon gas lasers (488 nm and 514.5 nm), helium, neon gas lasers (543 nm, 632.8 nm, 1150 nm), krypton gas lasers (330 to 360 nm, 420 to 800 nm), hydrogen gas lasers (2600 to 3000 nm) and nitrogen gas lasers (337 nm).

Solid state lasers are e.g. (in brackets the typical wavelength of the emitted radiation): Nd:YAG laser (Nd³⁺Y₃Al₅O₁₂) (1064 nm) high-power diode laser (800 to 1000 nm), ruby laser (694 nm), F₂ excimer laser (157 nm), ArF excimer laser (193 nm), KrCl excimer laser (222 nm), KrF excimer laser (248 nm), XeCl excimer laser (308 nm), XeF excimer laser (351 nm) and frequency-multiplied Nd:YAG lasers with wavelengths of 532 nm (frequency doubled), 355 nm (frequency tripled) or 266 nm (frequency quadrupled).

A preferred laser source is Nd:YAG laser (Nd³⁺Y₃Al₅O₁₂) (1064 nm).

The lasers used are usually operated at powers of 1 to 400, preferably 5 to 100 and especially 10 to 50 watts.

The energy densities of the lasers used are generally in the range from 0.3 mJ/cm2 to 50, J/cm2 preferably 0.3 mJ/cm2 to 10 J/cm2. When using pulsed lasers, the pulse frequency is generally in the range of 1 to 30 kHz. Corresponding lasers that can be used in this case are commercially available.

Preferably, a Nd:YAG laser as laser source may be used, more preferably a Nd:YAG laser operating in pulsed mode may be used. A Nd:YAG laser generates laser light having a wavelength of 1064 nm as fundamental mode.

When focusing the laser light from one or more laser sources onto the first spot in the section of the rear support layer where the light barrier element is to be generated, it may be advantageous to adjust the laser energy and a period of time, for which the focused laser rests on one spot in the section of the rear support layer. It may be possible that the focused laser rests on one spot for a period of time ≥ 0,001 s and ≤ 60 s, more preferably ≥ 0,002 s and ≤ 10 s, even more preferably ≥ 0,0025 s and ≤ 1 s. Furthermore, after having irradiated one spot, the focused laser may be shifted to a second spot in the section of the rear support layer where the light barrier element is to be generated. It may also be possible that the focused laser may not rest on one spot at all but is shifted with a continuous travel speed of 2 to 20.000 mm/s, more preferably of 10 to 15.000 mm/s, and even more preferably from 100 to 1000 mm/s. Preferably the laser power is ≥ 0,1 W and ≤ 400W, more preferably ≥ 0,5 W and ≤ 100W, even more preferably ≥ 10 W and ≤ 50 W.

If the light barrier element is particularly long or if it should not start on the lower surface of the rear support layer, a 3D interior engraving technique can be used as it is known to engrave 2- or 3-dimensional motifs (e.g. from CAD applications), logos, patterns and photos into plastics. With the support of a software, a virtual light barrier element is converted from the CAD file into a dot cloud. Each dot is calculated with its x, y and z coordinates. The laser light is preferably deflected by two computer-controlled galvanometer mirrors in x, y and z direction and focused on the section of the rear support layer, where the light barrier element should be generated. Preferably a plane-field lens is used for focusing the laser light. Each individual dot is then engraved into the rear support layer using a highly focused, frequency-doubled Nd:YAG 3D-laser (532 nm) with a very high speed. In the case the rear support layer of the blank display device is based on PMMA, this process usually creates bubbles, whereas in the case of PA, carbonization occurs and the pigment is created.

The invention will further be described without limiting effect by reference to the attached drawings, wherein the figures show:
- Fig. 1: a schematic view of a display device, according to prior art,
- Fig.2: two schematics views from different perspectives of the display device according to a preferred embodiment of the invention, and
- Fig.3: two schematics views from different perspectives of the display device according to another preferred embodiment of the invention.

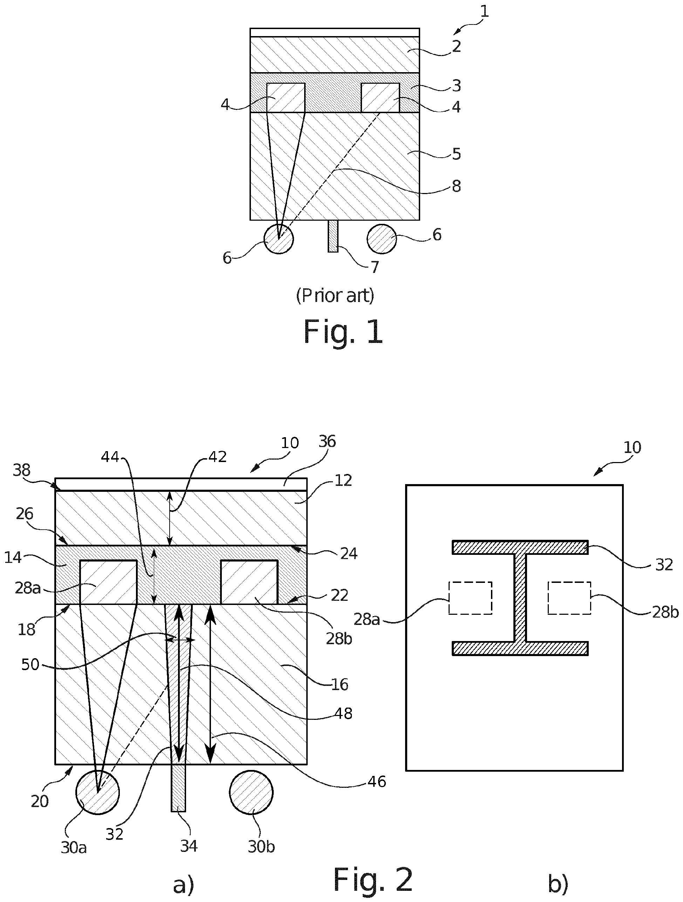

Figure 1 shows a schematic view of a display device 1 known in prior art. The display device according to prior art has a layered structure with a front layer 2, a functional layer 3 having two functional elements 4, and a rear support layer 5. The functional elements 4 in the functional layer 3 are transparent for visible light and are illuminable by a light source 6. There are two light sources 6, one for each functional element 4. The display device 1 further has a protrusion element 7 between the two light sources 6. However, despite of the protrusion element 7 there is stray light contamination 8 of the neighboring functional element 4 by the light source 6.

Figure 2 shows two schematic and perspective views of a display device 10 according to a preferred embodiment. The display device 10 according to the preferred embodiment has a layered structure as is visible from figure 2a). The display device 10 has a front layer 12, a functional layer 14, and a rear support layer 16. Figure 2b) shows the display device 10 viewed from rear support layer. As can be seen in figure 2a) the functional layer 14 is sandwiched between the front layer 12 and the rear support layer 16. An upper surface 18 of the rear support layer 16 is opposite to a lower surface 20 of the rear support layer 16 and contacts a lower surface 22 of the functional layer 14. An upper surface 24 of the functional layer 14 contacts a lower surface 26 of the front layer 12. The functional layer 14 comprises at least two functional elements 28a, 28b. The functional layer is based on the functional layer material. In this embodiment the functional layer material comprises the coloring agent piano black and red. The functional elements 28a, 28b in the functional layer 14 are transparent for visible light and are illuminable by a light source 30. The functional elements 28a, 28b are formed by the coloring agent red. There are two light sources 30a 30b, one for each functional element 28a, 28b. The functional elements 28a, 28b have a night and day marking, meaning that the functional elements 28a, 28b are not visible to the user as long as the functional elements 28a, 28b are not illuminated. However, the functional elements 28a, 28b become visible to the user when illuminated by the light sources 30a 30b. The light sources 30a 30b are installed behind the display device 10. The rear support layer 16 is transparent for visible light to facilitate the illumination of the functional elements 28. Furthermore, the rear support layer 16 of the display device 10 comprises at least one light barrier element 32. The rear support layer 16 and the light barrier element 32 are provided as one-piece component. The rear support layer 16 and the light barrier element 32 are of the same material with the exception that the light barrier element in addition comprises a pigment. The light barrier element 32 is therefore adapted for reducing or preventing light scattering through the light barrier element 32. The light barrier element 32 is arranged in the rear support layer 16, such that it extends essentially vertically from the lower surface 20 of the rear support layer 16 into the rear support layer 16. In this preferred embodiment the light barrier element 32 extends such far into the rear support layer 16 that its extension essentially corresponds to the thickness of the rear support layer 16. Furthermore, the light barrier element 32 is arranged between the two superposed functional elements 28a, 28b of the superposed functional layer 14, as can easily be seen from the perspective in figure 2a). Furthermore, the light barrier element 32 at least partly surrounds spaced apart at least one superposed functional element 28a, 28b for effective prevention of stray light contamination. When the display device 10 is viewed from the perspective of figure 2b), the light barrier element 32 partially surrounds the functional elements 28a, 28b. From the perspective in Figure 2b) the light barrier element 32 has the form of a "H".

In this preferred embodiment the two light sources 30a and 30b are OLED light source. The light emitted by the OLEDs is narrow-banded and corresponds to an absorption spectrum of the light barrier element 32.

In order to further reduce stray light contamination of neighboring functional elements 28a, 28b in this embodiment the display device 10 also comprise a protrusion element 34. The protrusion element 34 extends out of the lower surface 20 of the rear support layer 16 and is arranged between the two superposed functional elements 28a, 28b of the superposed functional layer 14. In this embodiment the protrusion element 34 is arranged on the lower surface 20 of the rear support layer 16 and positioned on the light barrier element 32. Furthermore, the protrusion element 36 is in between the two light sources 30a, 30b.

The display device 10 also comprises an anti-scratch layer 36 on an upper surface 38 of the front layer 12. The anti-scratch layer 36 is transparent for visible light to allow the visibility of the functional elements 28a, 28b for the user.

The front layer 12 of the display device 10 is also transparent. In this embodiment it comprises polycarbonate (PC). Furthermore, the rear support layer 16 and the light barrier element 32 comprise a mixture of polycarbonate (PC) and acrylonitrile butadiene styrene (ABS). Furthermore, the rear support layer comprises spherical Al-particles from Merck as laser absorber additive. The light barrier element 32 is of the same material as the rear support layer 16 with the exception that it further comprises the pigment. In this embodiment the pigment is carbon black, which is generated in the laser marking process, by the carbonization of the rear support material PC/ABS as pigment source.

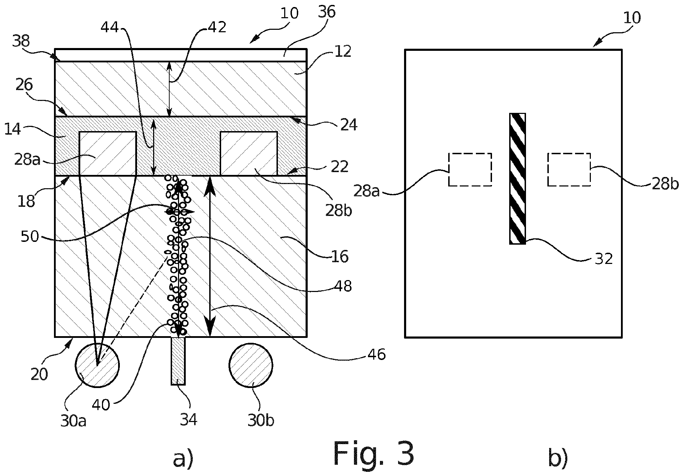

Figure 3 shows two schematic and perspective views of a display device 10 according to another preferred embodiment of the invention. The display device 10 of the embodiment in figure 3 is comparable to the display device 10 of the embodiment shown in figure 2. However, when the display device 10 is viewed from the perspective of figure 3b), the light barrier element 32 has the form of a "I" instead of a "H" as in figure 2b).

Furthermore, in the embodiment in figure 3, the light barrier element 32 does not comprise a pigment but instead inclusions of a gas 40. The light barrier element 32 in figure 3 is of the same material as the rear support layer 16 with the exception that it further comprises the inclusions of gas 40, in form of bubbles. In this embodiment the rear support layer 16 and the light barrier element 32 comprise poly(methyl methacrylate) (PMMA) and Pentaerythritol tetraacetate as gas source. Furthermore, they comprise "Iriotec" from Merck as laser additive.

In the embodiments of the display devices 10 in figures 2 and 3 the front layer 12 has a thickness 42 of 300 µm, the functional layer 14 has a thickness 44 of 250 µm, the rear support layer 16 has a thickness 46 of 2000 µm. Furthermore, a vertical extent 48 of the light barrier element 32 corresponds to the thickness 46 of the rear support layer 16. A thickness 50 of the light barrier element 32 varies between 30 µm and 500 µm.

The display devices 10 in figure 2 and 3 were provided by film insert molding and have been produced by the following method:
A blank display device comprising all parts of the display device 10 except for the light barrier element 32, the protrusion element 34, and the light sources 30 was also provided by film insert molding. For the blank display device, the functional layer 14 and the functional elements 28 were printed on the on the front layer 12 by a screen-printing process. In this case the front layer 12 is a plastic film used for film insert molding. The rear support layer 16 of the blank display device is based on a primary rear support layer material which comprises for the embodiment in figure 2
- 3,0 %wt of the laser additive "Iriotec"
- 0,5 %wt of Pentaeyrythritol tetraacetate
- 96,5 %wt, of a poly(methyl methacrylate) (PMMA).

Afterwards in a second step the light barrier element 32 is generated by a laser marking process. For this a section of the rear support layer 16 where the light barrier element 32 is to be generated is irradiated with a Nd:YAG-Laser (wavelength: 1064 nm; power: 10W, pulse frequency: 5 KHz; writing speeds: 10 - 250 mm/s).

High-contrast, dark markings up to a full depth were obtained, which showed excellent edge sharpness and dot accuracy. The plates remained clear-transparent.

Furthermore, the following process can be used to obtain a primary rear support layer material and a blank display device: A powder of spherical aluminium particles (Fa. ECKART GmbH & Co. KG, Fürth, Germany) with a D50 value of 1.57 µm, a D90 value of 3.37 µm and a D99 value of 7.55 µm (determined by laser granulometry with device Helos, Fa. Sympatec, Germany) as laser absorber additive was processed into a mixture in film insert molding in combination with PC/ABS.
- The following procedure was used to produce a 0.01 wt.% mixture:
   499.95 g of PC/ABS granulate and 0.05 g of the aluminium powder were mixed in a tumbler mixer and subsequently processed to a granulate in a twin screw extruder (Bersdorff, Germany, diameter 25 mm, 28UD) without the addition of further additives. This granulate was then used as a back-injection compound in film insert molding.

The light barrier element was introduced into the blank display device by marking with a Nd:YAG-Laser (wavelength: 1064 nm; power: 10W, pulse frequency: 5 KHz; writing speeds: 10 - 250 mm/s).

High-contrast, dark markings up to a full depth were obtained, which showed excellent edge sharpness and dot accuracy. The plates remained color-neutral.

**REFERENCE NUMERALS**

| | |
|---|---|
| display device (prior art) | 1 |
| front layer (prior art) | 2 |
| functional layer (prior art) | 3 |
| functional element (prior art) | 4 |
| rear support layer (prior art) | 5 |
| light source (prior art) | 6 |
| protrusion element (prior art) | 7 |
| display device | 10 |
| front layer | 12 |
| functional layer | 14 |
| rear support layer | 16 |
| upper surface of rear support layer | 18 |
| lower surface of rear support layer | 20 |
| lower surface of functional layer | 22 |
| upper surface of functional layer | 24 |
| lower surface of front layer | 26 |
| functional element | 28 |
| light source | 30 |
| light barrier element | 32 |
| protrusion element | 34 |
| anti-scratch layer | 36 |
| upper surface of front layer | 38 |
| inclusions of a gas | 40 |
| thickness of front layer | 42 |
| thickness of functional layer | 44 |
| thickness of rear support layer | 46 |
| vertical extent of light barrier element | 48 |
| thickness of light barrier element | 50 |

## Claims

1. Display device (10) with illuminable functional elements (28), comprising:
at least one functional layer (14),
at least one rear support layer (16), and
at least one light barrier element (32),
wherein the functional layer (14) is next to the rear support layer (16),
wherein an upper surface (18) of the rear support layer (16) is opposite to a lower surface (20) of the rear support layer (16) and contacts a lower surface (22) of the functional layer (14),
wherein the functional layer (14) comprises at least two functional elements (28a, 28b), that are light-transmissive for visible light and are illuminable by at least one light source (30),
wherein the rear support layer (16) is light-transmissive for visible light,
wherein the rear support layer (16) comprises at least one light barrier element (32),
wherein the light barrier element (32) extends essentially vertically in the rear support layer (16) and is arranged between of at least two superposed functional elements (28a, 28b) of the superposed functional layer (14),
wherein the light barrier element (32) arranged in the rear support layer (16) at least partly surrounds spaced apart at least one superposed functional element (28),
wherein the light barrier element (32) is adapted for reducing or preventing light scattering through the light barrier element (32),
**characterized in that**
the light barrier element (32) comprises a pigment and is formed in the rear support layer (16), such that the pigment exists as particle in the material of the rear support layer and/or wherein the light barrier element (32) comprises inclusions of a gas (40), preferably in form of bubbles, and is formed in the rear support layer (16).

2. Display device (10) according to claim 1, wherein the display device (10) comprises at least one front layer (12),
wherein the functional layer (14) is sandwiched between the front layer (12) and the rear support layer (16), and
wherein an upper surface (24) of the functional layer (14) contacts a lower surface (26) of the front layer (12).

3. Display device (10) according to claim 1 or 2, wherein the display device (10) comprises at least one light source (30), wherein the light source (30) is arranged below the rear support layer (16) and is positioned below at least one functional element (28), such that light emitted by the light source (30) substantially illuminates the at least one functional element (28) or wherein the display device (10) comprises at least one light source (30), wherein the light source (30) is arranged above the functional layer (14), and/or in case the display device (10) comprise a front layer (12) above the front layer (12), and is positioned above at least one functional element (28), such that light emitted by the light source (30) substantially illuminates the at least one functional element (28).

4. Display device (10) according to any one of the preceding claims, wherein the light barrier element (32) is less translucent than the rear support layer (16), and/or the light barrier element (32) absorbs more light in a wavelength that essentially corresponds to a wavelength of the light emitted by the light source (30) compared to the rear support layer (16), and/or the light barrier element (32) reflects more light in a wavelength that essentially corresponds to a wavelength of the light emitted by the light source (30) compared to the rear support layer (16).

5. Display device (10) according to any one of the preceding claims, wherein the light transmission in the range of 380 nm to 750 nm of the light barrier element (32) is at least 2 times, preferably at least 100 times, less compared with the light transmission in the range of 380 nm to 750 nm of the rear support layer (16), based on the same path length.

6. Display device (10) according to any one of the preceding claims, wherein the display device (10) comprises a light source (30a, 30b) for each functional element (28a, 28b).

7. Display device (10) according to any one of claims 3 to 6, wherein the light source (30) is an LED or OLED light source.

8. Display device (10) according to any one of claims 2 to 7, wherein a thickness (42) of the front layer (12) is ≥ 25 µm to ≤ 40000 µm, preferably ≥ 50 µm to ≤ 10000 µm, more preferably ≥ 250 µm to ≤ 500 µm.

9. Display device (10) according to any one of the preceding claims, wherein a thickness (44) of the functional layer (14) is ≥ 1 µm to ≤ 350 µm, preferably ≥ 5 µm to ≤ 200 µm, more preferably ≥ 20 µm to ≤ 100 µm.

10. Display device (10) according to any one of the preceding claims, wherein a thickness (46) of the rear support layer (16) is ≥ 25 µm to ≤ 40000 µm, preferably ≥ 50 µm to ≤ 20000 µm, more preferably in between ≥ 500 µm to ≤ 10000 µm.

11. Display device (10) according to any one of the preceding claims, wherein a vertical extent (48) of the light barrier element (32) extending vertically into the rear support layer (16) is in between 0,0025% to 100% of the thickness of the rear support layer (16), and/or ≥ 1 µm, preferably ≥ 100 µm, and more preferably ≥ 250 µm.

12. Display device (10) according to any one of the preceding claims, wherein the thickness (50) of the light barrier element (32) in the rear support layer (16) is ≥ 1 µm to ≤ 10.000 µm, preferably ≥ 10 µm to ≤ 5.000 µm, more preferably in between ≥ 50 µm to ≤ 1.000 µm.

13. Display device (10) according to any one of the preceding claims, wherein the display device (10) comprises a protrusion element (34), wherein the protrusion element (34) extends out of the lower surface (20) of the rear support layer (16) and is arranged between of at least two superposed functional elements (28a, 28b) of the superposed functional layer (14).

14. Display device (10) according to any one of claims 2 to 13, wherein the front layer (12) comprises a front-layer-support-layer-polymer or mixtures thereof selected from the group comprising polycarbonate (PC), polyethylene terephthalate (PET), polyethylene naphthalate (PEN), polyethylene furanoate (PEF), glycolized or amorphous polyester, glycolized or amorphous polyethylene terephthalate (PET-G or A-PET), polytrimethylenterephthalet (PTT), polybutylenterephtalhat (PBT), poly(methyl methacrylate) (PMMA), polypropylene (PP), polyvinyl chloride (PVC), cellulose triacetate (TCA), polyamide (PA), poly imide (PI) or polyethylene (PE), polyoxymethylene (POM), polystyrene (PS), polyurethane (PU), silicone and acrylonitrile butadiene styrene (ABS).

15. Display device (10) according to any one of the preceding claims, wherein the display device (10) comprises an anti-scratch layer (36) on an upper surface (38) of the front layer (12), on an upper surface (24) of the functional layer (12), or on the lower surface (20) of the rear support layer (16).

16. Display device (10) according to claim 15, wherein the anti-scratch layer (36) comprises an anti-scratch layer polymer or mixtures thereof selected from the group comprising acrylic resin, epoxy resins, and polyurethane.

17. Display device (10) according to any one of the preceding claims, wherein the light barrier element (32) and the rear support layer (16) are a one-piece component.

18. Display device (10) according to any one of the preceding claims, wherein the light barrier element (32) and the rear support layer (16) are of the same material, with the exception that the light barrier element (32) comprises in addition the pigment, so that the transmittance of the light barrier element (32) for light having a wavelength of 380 nm to 750 nm is less than the transmittance of the rear support layer (16) for light having a wavelength of 380 nm to 750 nm.

19. Display device (10) according to any of claims 1 to 17, wherein the light barrier element (32) and the rear support layer (16) are of the same material, with the exception that the light barrier element (32) comprises in addition the inclusions of a gas (40), preferably in form of bubbles, so that the transmittance of the light barrier element (32) for light having a wavelength of 380 nm to 750 nm is less than the transmittance of the rear support layer (16) for light having a wavelength of 380 nm to 750 nm.

20. Display device (10) according to any one of the preceding claims, wherein the pigment is carbon black.

21. Display device (10) according to any one of the preceding claims, wherein the light barrier element (32) and the rear support layer (16) are based on a rear support layer material, wherein the rear support layer material comprises
- a front-layer-support-layer-polymer or mixtures thereof, selected from the group comprising polycarbonate (PC), polyethylene terephthalate (PET), polyethylene naphthalate (PEN), polyethylene furanoate (PEF), glycolized or amorphous polyester, glycolized or amorphous polyethylene terephthalate (PET-G or A-PET), polytrimethylenterephthalet (PTT), polybutylenterephtalhat (PBT), poly(methyl methacrylate) (PMMA), polypropylene (PP), polyvinyl chloride (PVC), cellulose triacetate (TCA), polyamide (PA), poly imide (PI) or polyethylene (PE), polyoxymethylene (POM), polystyrene (PS), polyurethane (PU), silicone, and acrylonitrile butadiene styrene (ABS)
- optionally a laser absorber additive or mixtures thereof,
and
- optionally a pigment/gas source or mixtures thereof.

22. Display device (10) according to any one of the preceding claims, wherein the light barrier element (32) is based on the rear support layer material, and in addition comprises the pigment and/or the inclusions of a gas (40) or mixtures thereof.

23. Display device (10) according to any one of the preceding claims, wherein the light barrier element (32) and the rear support layer (16) have been made from a primary rear support layer material of a blank display device not having a light barrier element, wherein the primary rear support layer material comprises
- a front-layer-support-layer-polymer or mixtures thereof, selected from the group comprising polycarbonate (PC), polyethylene terephthalate (PET), polyethylene naphthalate (PEN), polyethylene furanoate (PEF), glycolized or amorphous polyester, glycolized or amorphous polyethylene terephthalate (PET-G or A-PET), polytrimethylenterephthalet (PTT), polybutylenterephtalhat (PBT), poly(methyl methacrylate) (PMMA), polypropylene (PP), polyvinyl chloride (PVC), cellulose triacetate (TCA), polyamide (PA), poly imide (PI) or polyethylene (PE), polyoxymethylene (POM), polystyrene (PS), polyurethane (PU), silicone, and acrylonitrile butadiene styrene (ABS)
- optionally a laser absorber additive or mixtures thereof,
and
- optionally a pigment/gas source or mixtures thereof.

24. Display device (10) according to claim 23, wherein the primary rear support layer material comprises
- 0-5 %wt, preferably 0,0002-4 %wt, more preferably 0,0005-3 %wt, of the laser absorber additive or mixtures thereof,
- 0-5 %wt, preferably 1-4 %wt, more preferably 2-3 %wt, of the pigment/gas source or mixtures thereof, and
- 90-100 %wt, preferably 92-98 %wt, more preferably 94-96 %wt, of the front-layer support layer polymer or mixtures thereof.

25. Display device (10) according to any one of the preceding claims, wherein the functional layer and/or the functional elements (28) are based on a functional layer material, wherein the functional layer material comprises a coloring agent or mixtures thereof.

26. Method for producing a display device (10) comprising the steps of
a) providing a blank display device, wherein the blank display device comprises
at least one functional layer (14), and
at least one rear support layer (16),
wherein the functional layer (14) is next to the rear support layer (16),
wherein an upper surface (18) of the rear support layer (16) is opposite to a lower surface (20) of the rear support layer (16) and contacts a lower surface (22) of the functional layer (14),
wherein the functional layer (14) comprises at least two functional elements (28a, 28b), that are light-transmissive for visible light and are illuminable by at least one light source (30),
wherein the rear support layer (16) is light-transmissive for visible light, wherein rear support layer (16) is based on a primary rear support layer material
b) producing at least one light barrier element (32) in the rear support layer (16), by irradiating a section of the rear support layer (16) where the light barrier element (32) is to be generated by laser light, wherein the laser light has a wavelength such that the laser light is at least partially absorbed by the primary rear support layer material.

27. Method according to claim 26 wherein in step a) the primary rear support layer material of the rear support layer of the blank display device comprises
- a front-layer-support-layer-polymer or mixtures thereof, selected from the group comprising polycarbonate (PC), polyethylene terephthalate (PET), polyethylene naphthalate (PEN), polyethylene furanoate (PEF), glycolized or amorphous polyester, glycolized or amorphous polyethylene terephthalate (PET-G or A-PET), polytrimethylenterephthalet (PTT), polybutylenterephtalhat (PBT), poly(methyl methacrylate) (PMMA), polypropylene (PP), polyvinyl chloride (PVC), cellulose triacetate (TCA), polyamide (PA), poly imide (PI) or polyethylene (PE), polyoxymethylene (POM), polystyrene (PS), polyurethane (PU), silicone, and acrylonitrile butadiene styrene (ABS)
- optionally a laser absorber additive or mixtures thereof,
and
- optionally a pigment/gas source or mixtures thereof.

28. Method according to claim 26 or 27 wherein in step a) the primary rear support layer material of the rear support layer of the blank display device comprises
- 0-5 %wt, preferably 0,0002-4 %wt, more preferably 0,0005-3 %wt, of the laser absorber additive or mixtures thereof,
- 0-5 %wt, preferably 1-4 %wt, more preferably 2-3 %wt, of the pigment/gas source or mixtures thereof, and
- 90-100 %wt, preferably 92-98 %wt, more preferably 94-96 %wt, of the front-layer support layer polymer or mixtures thereof.

29. Method according to any of claims 26 to 28 wherein in step a) the primary rear support layer material of the rear support layer of the blank display device comprises a laser absorber additive or mixtures thereof and optionally a pigment/gas source or mixtures thereof,
and in step b) the laser light has a wavelength such that the laser light is at least partially absorbed by the laser absorber additive.

30. Method according to any of claims 26 to 29 wherein the blank display device in step a) is produced by film insert molding, in-mold decoration, in-mold labelling, lamination, over-molding, multi-material injection molding, and/or a stacking process of the layers.

31. Method according to any of claims 26 to 30, wherein in step b) the irradiating of the section of the rear support layer (16) where the light barrier element (32) is to be generated by laser light comprises focusing laser light from one or more laser sources onto a first spot in the section of the rear support layer (16) where the light barrier element (32) is to be generated.

## Patentansprüche

1. Anzeigevorrichtung mit beleuchtbaren Funktionselementen (28), mit:
mindestens einer Funktionsschicht (14);
mindestens einer hinteren Trägerschicht (16); und
mindestens einem Lichtbarriereelement (32),
wobei die Funktionsschicht (14) der hinteren Trägerschicht (16) benachbart ist,
wobei eine obere Fläche (18) der hinteren Trägerschicht (16) einer unteren Fläche (20) der hinteren Trägerschicht (16) gegenüberliegt und mit einer unteren Fläche (22) der Funktionsschicht (14) in Kontakt steht,
wobei die Funktionsschicht (14) mindestens zwei Funktionselemente (28a, 28b) aufweist, die für sichtbares Licht lichtdurchlässig sind und durch mindestens eine Lichtquelle (30) beleuchtbar sind,
wobei die hintere Trägerschicht (16) für sichtbares Licht lichtdurchlässig ist,
wobei die hintere Trägerschicht (16) mindestens ein Lichtbarriereelement (32) aufweist,
wobei sich das Lichtbarriereelement (32) im Wesentlichen vertikal in der hinteren Trägerschicht (16) erstreckt und zwischen mindestens zwei Funktionselementen (28a, 28b) der überlagerten Funktionsschicht (14) angeordnet ist,
wobei das in der hinteren Trägerschicht (16) angeordnete Lichtbarriereelement (32) mindestens ein Funktionselement (28) zumindest teilweise in einem Abstand umgibt,
wobei das Lichtbarriereelement (32) dazu geeignet ist, Lichtstreuung durch das Lichtbarriereelement (32) zu vermindern oder zu verhindern,
**dadurch gekennzeichnet, dass**
das Lichtbarriereelement (32) ein Pigment aufweist und in der hinteren Trägerschicht (16) derart ausgebildet ist, dass das Pigment als Partikel im Material der hinteren Trägerschicht vorhanden ist, und/oder das Lichtbarriereelement (32) Gaseinschlüsse (40), vorzugsweise in der Form von Blasen, aufweist und in der hinteren Trägerschicht (16) ausgebildet ist.

2. Anzeigevorrichtung (10) nach Anspruch 1, wobei die Anzeigevorrichtung (10) mindestens eine Vorderschicht (12) aufweist,
wobei die Funktionsschicht (14) zwischen der Vorderschicht (12) und der hinteren Trägerschicht (16) sandwichartig angeordnet ist, und
wobei eine obere Fläche (24) der Funktionsschicht (14) mit einer unteren Fläche (26) der Vorderschicht (12) in Kontakt steht.

3. Anzeigevorrichtung (10) nach Anspruch 1 oder 2, wobei die Anzeigevorrichtung (10) mindestens eine Lichtquelle (30) aufweist, wobei die Lichtquelle (30) unter der hinteren Trägerschicht (16) angeordnet ist und unter mindestens einem Funktionselement (28) angeordnet ist, so dass durch die Lichtquelle (30) emittiertes Licht im Wesentlichen das mindestens eine Funktionselement (28) beleuchtet, oder wobei die Anzeigevorrichtung (10) mindestens eine Lichtquelle (30) aufweist, wobei die Lichtquelle (30) über der Funktionsschicht (14) angeordnet ist, und/oder, falls die Anzeigevorrichtung (10) eine Vorderschicht (12) aufweist, die Lichtquelle (30) über der Vorderschicht (12) und über mindestens einem Funktionselement (28) angeordnet ist, so dass durch die Lichtquelle (30) emittiertes Licht das mindestens eine Funktionselement (28) im Wesentlichen beleuchtet.

4. Anzeigevorrichtung (10) nach einem der vorhergehenden Ansprüche, wobei das Lichtbarriereelement (32) weniger transluzent ist als die hintere Trägerschicht (16), und/oder das Lichtbarriereelement (32) im Vergleich zur hinteren Trägerschicht (16) mehr Licht bei einer Wellenlänge absorbiert, die im Wesentlichen einer Wellenlänge des durch die Lichtquelle (30) emittierten Lichts entspricht, und/oder das Lichtbarriereelement (32) im Vergleich zur hinteren Trägerschicht (16) mehr Licht bei einer Wellenlänge reflektiert, die im Wesentlichen einer Wellenlänge des durch die Lichtquelle (30) emittierten Lichts entspricht.

5. Anzeigevorrichtung (10) nach einem der vorhergehenden Ansprüche, wobei, bezogen auf die gleiche Weglänge, die Lichttransmission des Lichtbarriereelements (32) im Bereich von 380 nm bis 750 nm mindestens 2-mal, vorzugsweise mindestens 100-mal geringer ist als die Lichttransmission der hinteren Trägerschicht (16) im Bereich von 380 nm bis 750 nm.

6. Anzeigevorrichtung (10) nach einem der vorhergehenden Ansprüche, wobei die Anzeigevorrichtung (10) für jedes Funktionselement (28a, 28b) eine Lichtquelle (30a, 30b) aufweist.

7. Anzeigevorrichtung (10) nach einem der Ansprüche 3 bis 6, wobei die Lichtquelle (30) eine LED- oder eine OLED-Lichtquelle ist.

8. Anzeigevorrichtung (10) nach einem der Ansprüche 2 bis 7, wobei eine Dicke (42) der Vorderschicht (12) ≥ 25 µm bis <_ 40000 µm, vorzugsweise ≥ 50 µm bis ≤ 10000 µm, bevorzugter ≥ 250 µm bis ≤ 500 µm ist.

9. Anzeigevorrichtung (10) nach einem der vorhergehenden Ansprüche, wobei eine Dicke (44) der Funktionsschicht (14) ≥ 1 µm bis ≤ 350 µm, vorzugsweise ≥ 5 µm bis ≤ 200 µm, bevorzugter ≥ 20 µm bis ≤ 100 µm ist.

10. Anzeigevorrichtung (10) nach einem der vorhergehenden Ansprüche, wobei eine Dicke (46) der hinteren Trägerschicht (16) ≥ 25 µm bis ≤ 40000 µm, vorzugsweise ≥ 50 µm bis ≤ 20000 µm, bevorzugter ≥ 500 µm bis ≤ 10000 µm ist.

11. Anzeigevorrichtung (10) nach einem der vorhergehenden Ansprüche, wobei eine vertikale Ausdehnung (48) des Lichtbarriereelements (32), das sich vertikal in die hintere Trägerschicht (16) erstreckt, zwischen 0,0025% und 100% der Dicke der hinteren Trägerschicht (16) beträgt, und/oder ≥ 1 µm, vorzugsweise ≥ 100 µm, und bevorzugter ≥ 250 µm ist.

12. Anzeigevorrichtung (10) nach einem der vorhergehenden Ansprüche, wobei die Dicke (50) des Lichtbarriereelements (32) in der hinteren Trägerschicht (16) ≥ 1 µm bis ≤ 10000 µm, vorzugsweise ≥ 10 µm bis ≤ 5000 µm, bevorzugter ≥ 50 µm bis ≤ 1000 µm ist.

13. Anzeigevorrichtung (10) nach einem der vorhergehenden Ansprüche, wobei die Anzeigevorrichtung (10) ein Vorsprungelement (34) aufweist, wobei das Vorsprungelement (34) sich aus der unteren Fläche (20) der hinteren Trägerschicht (16) erstreckt und zwischen mindestens zwei Funktionselementen (28a, 28b) der überlagerten Funktionsschicht (14) angeordnet ist.

14. Anzeigevorrichtung (10) nach einem der Ansprüche 2 bis 13, wobei die Vorderschicht (12) ein Vorderschicht-Trägerschicht-Polymer oder Mischungen davon aufweist, das/die ausgewählt ist/sind aus der Gruppe bestehend aus Polycarbonat (PC), Polyethylenterephthalat (PET), Polyethylennaphthalat (PEN), Polyethylenfuranoat (PEF), glykolisiertem oder amorphem Polyester, glykolisiertem oder amorphem Polyethylenterephthalat (PET-G oder A-PET), Polytrimethylenterephthalat (PTT), Polybutylenterephtalhat (PBT), Poly(methylmethacrylat) (PMMA), Polypropylen (PP), Polyvinylchlorid (PVC), Cellulosetriacetat (TCA), Polyamid (PA), Polyimid (PI) oder Polyethylen (PE), Polyoxymethylen (POM), Polystyrol (PS), Polyurethan (PU), Silikon und Acrylnitril-Butadien-Styrol (ABS).

15. Anzeigevorrichtung (10) nach einem der vorhergehenden Ansprüche, wobei die Anzeigevorrichtung (10) eine kratzfeste Beschichtung (36) auf einer oberen Fläche (38) der Vorderschicht (12), auf einer oberen Fläche (24) der Funktionsschicht (12) oder auf der unteren Fläche (20) der hinteren Trägerschicht (16) aufweist.

16. Anzeigevorrichtung (10) nach Anspruch 15, wobei die kratzfeste Beschichtung (36) ein Polymer oder Mischungen davon aufweist, das/die ausgewählt ist/sind aus der Gruppe bestehend aus Acrylharz, Epoxidharzen und Polyurethan.

17. Anzeigevorrichtung (10) nach einem der vorhergehenden Ansprüche, wobei das Lichtbarriereelement (32) und die hintere Trägerschicht (16) eine einteilige Komponente sind.

18. Anzeigevorrichtung (10) nach einem der vorhergehenden Ansprüche, wobei das Lichtbarriereelement (32) und die hintere Trägerschicht (16) aus dem gleichen Material bestehen, mit der Ausnahme, dass das Lichtbarriereelement (32) zusätzlich das Pigment aufweist, so dass die Lichtdurchlässigkeit des Lichtbarriereelements (32) für Licht mit einer Wellenlänge von 380 nm bis 750 nm geringer ist als die Lichtdurchlässigkeit der hinteren Trägerschicht (16) für Licht mit einer Wellenlänge von 380 nm bis 750 nm.

19. Anzeigevorrichtung (10) nach einem der Ansprüche 1 bis 17, wobei das Lichtbarriereelement (32) und die hintere Trägerschicht (16) aus dem gleichen Material bestehen, mit der Ausnahme, dass das Lichtbarriereelement (32) zusätzlich die Gaseinschlüsse (40), vorzugsweise in Form von Blasen, aufweist, so dass die Lichtdurchlässigkeit des Lichtbarriereelements (32) für Licht mit einer Wellenlänge von 380 nm bis 750 nm geringer ist als die Lichtdurchlässigkeit der hinteren Trägerschicht (16) für Licht mit einer Wellenlänge von 380 nm bis 750 nm.

20. Anzeigevorrichtung (10) nach einem der vorhergehenden Ansprüche, wobei das Pigment Ruß ist.

21. Anzeigevorrichtung (10) nach einem der vorhergehenden Ansprüche, wobei das Lichtbarriereelement (32) und die hintere Trägerschicht (16) auf einem Material der hinteren Trägerschicht basieren, wobei das Material der hinteren Trägerschicht aufweist:
ein Vorderschicht-Trägerschicht-Polymer oder Mischungen davon, das/die ausgewählt ist/sind aus der Gruppe bestehend aus Polycarbonat (PC), Polyethylenterephthalat (PET), Polyethylennaphthalat (PEN), Polyethylenfuranoat (PEF), glykolisiertem oder amorphem Polyester, glykolisiertem oder amorphem Polyethylenterephthalat (PET-G oder A-PET), Polytrimethylenterephthalat (PTT), Polybutylenterephtalhat (PBT), Poly(methylmethacrylate) (PMMA), Polypropylen (PP), Polyvinylchlorid (PVC), Cellulosetriacetat (TCA), Polyamid (PA), Polyimid (PI) oder Polyethylen (PE), Polyoxymethylen (POM), Polystyrol (PS), Polyurethan (PU), Silikon und Acrylnitril-Butadien-Styrol (ABS);
optional ein Laserabsorber-Additiv oder Mischungen davon;
und
optional ein Pigment/eine Gasquelle oder Mischungen davon.

22. Anzeigevorrichtung (10) nach einem der vorhergehenden Ansprüche, wobei das Lichtbarriereelement (32) auf dem Material der hinteren Trägerschicht basiert und zusätzlich das Pigment und/oder die Gaseinschlüsse (40) oder Mischungen davon aufweist.

23. Anzeigevorrichtung (10) nach einem der vorhergehenden Ansprüche, wobei das Lichtbarriereelement (32) und die hintere Trägerschicht (16) aus einem primären Material der hinteren Trägerschicht eines Anzeigevorrichtungs-Vorprodukts ohne Lichtbarriereelement hergestellt sind, wobei das primäre Material der hinteren Trägerschicht aufweist:
ein Vorderschicht-Trägerschicht-Polymer oder Mischungen davon, das/die ausgewählt ist/sind aus der Gruppe bestehend aus Polycarbonat (PC), Polyethylenterephthalat (PET), Polyethylennaphthalat (PEN), Polyethylenfuranoat (PEF), glykolisiertem oder amorphem Polyester, glykolisiertem oder amorphem Polyethylenterephthalat (PET-G oder A-PET), Polytrimethylenterephthalat (PTT), Polybutylenterephtalhat (PBT), Poly(methylmethacrylate) (PMMA), Polypropylen (PP), Polyvinylchlorid (PVC), Cellulosetriacetat (TCA), Polyamid (PA), Polyimid (PI) oder Polyethylen (PE), Polyoxymethylen (POM), Polystyrol (PS), Polyurethan (PU), Silikon und Acrylnitril-Butadien-Styrol (ABS);
optional ein Laserabsorber-Additiv oder Mischungen davon;
und
optional ein Pigment/eine Gasquelle oder Mischungen davon.

24. Anzeigevorrichtung (10) nach Anspruch 23, wobei das primäre Material der hinteren Trägerschicht aufweist:
0 - 5 Gew.-%, vorzugsweise 0,0002 - 4 Gew.-%, bevorzugter 0,0005 - 3 Gew.-% des Laserabsorber-Additivs oder von Mischungen davon;
0 - 5 Gew.-%, vorzugsweise 1 - 4 Gew.-%, bevorzugter 2 - 3 Gew.-% des Pigments/der Gasquelle oder von Mischungen davon; und
90 - 100 Gew.-%, vorzugsweise 92 - 98 Gew.-%, bevorzugter 94 - 96 Gew.-% des Vorderschicht-Trägerschicht-Polymers oder von Mischungen davon.

25. Anzeigevorrichtung (10) nach einem der vorhergehenden Ansprüche, wobei die Funktionsschicht und/oder die Funktionselemente (28) auf einem Funktionsschichtmaterial basieren, wobei das Funktionsschichtmaterial einen Farbstoff oder Mischungen davon enthält.

26. Verfahren zum Herstellen einer Anzeigevorrichtung (10), mit den Schritten:
a) Bereitstellen eines Anzeigevorrichtungs-Vorprodukts, wobei das Anzeigevorrichtungs-Vorprodukt mindestens eine Funktionsschicht (14) und mindestens eine hintere Trägerschicht (16) aufweist,
wobei die Funktionsschicht (14) der hinteren Trägerschicht (16) benachbart ist,
wobei eine obere Fläche (18) der hinteren Trägerschicht (16) einer unteren Fläche (20) der hinteren Trägerschicht (16) gegenüberliegt und mit einer unteren Fläche (22) der Funktionsschicht (14) in Kontakt steht,
wobei die Funktionsschicht (14) mindestens zwei Funktionselemente (28a, 28b) aufweist, die für sichtbares Licht lichtdurchlässig sind und durch mindestens eine Lichtquelle (30) beleuchtbar sind,
wobei die hintere Trägerschicht (16) für sichtbares Licht lichtdurchlässig ist, wobei die hintere Trägerschicht (16) auf einem primären Material der hinteren Trägerschicht basiert; und
b) Erzeugen mindestens eines Lichtbarriereelements (32) in der hinteren Trägerschicht (16) durch Bestrahlen eines Abschnitts der hinteren Trägerschicht (16), in dem das Lichtbarriereelement (32) erzeugt werden soll, mit Laserlicht, wobei das Laserlicht eine derartige Wellenlänge aufweist, dass das Laserlicht durch das primäre Material der hinteren Trägerschicht zumindest teilweise absorbiert wird.

27. Verfahren nach Anspruch 26, wobei in Schritt a) das primäre Material der hinteren Trägerschicht des Anzeigevorrichtungs-Vorprodukts aufweist:
ein Vorderschicht-Trägerschicht-Polymer oder Mischungen davon, das/die ausgewählt ist/sind aus der Gruppe bestehend aus Polycarbonat (PC), Polyethylenterephthalat (PET), Polyethylennaphthalat (PEN), Polyethylenfuranoat (PEF), glykolisiertem oder amorphem Polyester, glykolisiertem oder amorphem Polyethylenterephthalat (PET-G oder A-PET), Polytrimethylenterephthalet (PTT), Polybutylenterephtalhat (PBT), Poly(methylmethacrylat) (PMMA), Polypropylen (PP), Polyvinylchlorid (PVC), Cellulosetriacetat (TCA), Polyamid (PA), Polyimid (PI) oder Polyethylen (PE), Polyoxymethylen (POM), Polystyrol (PS), Polyurethan (PU), Silikon und Acrylnitril-Butadien-Styrol (ABS);
optional ein Laserabsorber-Additiv oder Mischungen davon; und
optional ein Pigment/eine Gasquelle oder Mischungen davon.

28. Verfahren nach Anspruch 26 oder 27, wobei in Schritt a) das primäre Material der hinteren Trägerschicht des Anzeigevorrichtungs-Vorprodukts aufweist:
0 - 5 Gew.-%, vorzugsweise 0,0002 - 4 Gew.-%, bevorzugter 0,0005 - 3 Gew.-% des Laserabsorber-Additivs oder von Mischungen davon;
0 - 5 Gew.-%, vorzugsweise 1 - 4 Gew.-%, bevorzugter 2 - 3 Gew.-% des Pigments/der Gasquelle oder von Mischungen davon; und
90 - 100 Gew.-%, vorzugsweise 92 - 98 Gew.-%, bevorzugter 94 - 96 Gew.-% des Vorderschicht-Trägerschicht-Polymers oder von Mischungen davon.

29. Verfahren nach einem der Ansprüche 26 bis 28, wobei in Schritt a) das primäre Material der hinteren Trägerschicht des Anzeigevorrichtungs-Vorprodukts ein Laserabsorber-Additiv oder Mischungen davon und optional ein Pigment/eine Gasquelle oder Mischungen davon aufweist, und
in Schritt b) das Laserlicht eine derartige Wellenlänge hat, dass das Laserlicht durch das Laserabsorber-Additiv zumindest teilweise absorbiert wird.

30. Verfahren nach einem der Ansprüche 26 bis 29, wobei das Anzeigevorrichtungs-Vorprodukt in Schritt a) durch Film-Insert-Molding, In-Mold-Decoration, In-Mold-Labeling, Laminieren, Überspritzen, Multimaterial-Spritzgießen und/oder einen Schichtstapelungsprozess hergestellt wird.

31. Verfahren nach einem der Ansprüche 26 bis 30, wobei in Schritt b) das Bestrahlen des Abschnitts der hinteren Trägerschicht (16), in dem das Lichtbarriereelement (32) durch Laserlicht erzeugt werden soll, das Fokussieren von Laserlicht von einer oder mehreren Laserquellen auf einen ersten Strahlfleck in dem Abschnitt der hinteren Trägerschicht (16) aufweist, in dem das Lichtbarriereelement (32) erzeugt werden soll.

## Revendications

1. Dispositif d'affichage (10) ayant des éléments fonctionnels pouvant être illuminés (28), comprenant :
au moins une couche fonctionnelle (14),
au moins une couche de support arrière (16), et
au moins un élément de barrière à la lumière (32),
dans lequel la couche fonctionnelle (14) est juxtaposée à la couche de support arrière (16),
dans lequel une surface supérieure (18) de la couche de support arrière (16) est opposée à une surface inférieure (20) de la couche de support arrière (16) et est en contact avec une surface inférieure (22) de la couche fonctionnelle (14),
dans lequel la couche fonctionnelle (14) transmet la lumière visible,
dans lequel la couche de support arrière (16) comprend un élément de barrière à la lumière (32),
dans lequel l'élément de barrière à la lumière (32) s'étend essentiellement verticalement dans la couche de support arrière (16) et est disposé entre au moins deux éléments fonctionnels superposés (28a, 28b) de la couche fonctionnelle superposée (14),
dans lequel l'élément de barrière à la lumière (32) est adapté pour réduire ou prévenir la diffusion de lumière à travers l'élément de barrière à la lumière (32),
**caractérisé en ce que** l'élément de barrière à la lumière (32) comprend un pigment et est formé dans la couche de support arrière (16), de sorte que le pigment existe en tant que particule dans le matériau de la couche de support arrière et/ou **en ce que** l'élément de barrière à la lumière (32) comprend des inclusions d'un gaz (40), préférablement sous forme de bulles, et est formé dans la couche de support arrière (16).

2. Dispositif d'affichage (10) selon la revendication 1, dans lequel le dispositif d'affichage (10) comprend au moins une couche avant (12),
dans lequel la couche fonctionnelle (14) est prise en sandwich entre la couche avant (12) et la couche de support arrière (16), et
dans lequel une surface supérieure (24) de la couche fonctionnelle (14) est en contact avec une surface inférieure (26) de la couche avant (12).

3. Dispositif d'affichage (10) selon la revendication 1 ou la revendication 2, dans lequel le dispositif d'affichage (10) comprend au moins une source de lumière (30), dans lequel la source de lumière (30) est disposée au-dessous de la couche de support arrière (16) et est positionnée au-dessous d'au moins un élément fonctionnel (28), de sorte que la lumière émise par la source de lumière (30) illumine substantiellement l'au moins un élément fonctionnel (28) ou dans lequel le dispositif d'affichage (10) comprend au moins une source de lumière (30), dans lequel la source de lumière (30) est disposée au-dessus de la couche fonctionnelle (14), et/ou dans le cas où le dispositif d'affichage (10) comprend une couche avant (12), au-dessus de la couche avant (12), et est positionnée au-dessus d'au moins un élément fonctionnel (28), de sorte que la lumière émise par la source de lumière (30) illumine substantiellement l'au moins un élément fonctionnel (28).

4. Dispositif d'affichage (10) selon l'une quelconque des revendications précédentes, dans lequel l'élément de barrière à la lumière (32) est moins translucide que la couche de support arrière (16), et/ou l'élément de barrière à la lumière (32) absorbe davantage de lumière à une longueur d'onde correspondant essentiellement à une longueur d'onde de la lumière émise par la source de lumière (30) en comparaison de la couche de support arrière (16), et/ou l'élément de barrière à la lumière (32) réfléchit davantage de lumière à une longueur d'onde correspondant essentiellement à une longueur d'onde de la lumière émise par la source de lumière (30) en comparaison de la couche de support arrière (16).

5. Dispositif d'affichage (10) selon l'une quelconque des revendications précédentes, dans lequel la transmission de la lumière dans la plage de 380 nm à 750 nm de l'élément de barrière à la lumière (32) est au moins deux fois, préférablement 100 fois, inférieure en comparaison de la transmission de la lumière dans la plage de 380 nm à 750 nm de la couche de support arrière (16), sur la base du même chemin.

6. Dispositif d'affichage (10) selon l'une quelconque des revendications précédentes, dans lequel le dispositif d'affichage (10) comprend une source de lumière (30a, 30b) pour chaque élément fonctionnel (28a, 28b).

7. Dispositif d'affichage (10) selon l'une quelconque des revendications 3 à 6, dans lequel la source de lumière (30) est une diode électroluminescente ou une diode électroluminescente organique.

8. Dispositif d'affichage (10) selon l'une quelconque des revendications 2 à 7, dans lequel une épaisseur (42) de la couche avant (12) est ≥ 25 µm et ≤ 40000 µm, préférablement ≥ 50 µm et ≤ 10000 µm, plus préférablement ≥ 250 µm et ≤ 500 µm.

9. Dispositif d'affichage (10) selon l'une quelconque des revendications précédentes, dans lequel une épaisseur (44) de la couche fonctionnelle (14) est ≥ 1 µm et ≤ 350 µm, préférablement ≥ 5 µm et ≤ 200 µm, plus préférablement ≥ 20 µm et ≤ 100 µm.

10. Dispositif d'affichage (10) selon l'une quelconque des revendications précédentes, dans lequel une épaisseur (46) de la couche de support arrière (16) est ≥ 25 µm et ≤ 40000 µm, préférablement ≥ 50 µm et ≤ 20000 µm, plus préférablement ≥ 500 µm et ≤ 10000 µm.

11. Dispositif d'affichage (10) selon l'une quelconque des revendications précédentes, dans lequel une extension verticale (48) de l'élément de barrière à la lumière (32) s'étendant verticalement dans la couche de support arrière (16) est entre 0,0025% et 100% de l'épaisseur de la couche de support arrière (16), et/ou ≥ 1 µm, préférablement ≥ 100 µm, et plus préférablement ≥ 250 µm.

12. Dispositif d'affichage (10) selon l'une quelconque des revendications précédentes, dans lequel l'épaisseur de l'élément de barrière à la lumière (32) dans la couche de support arrière (16) est ≥ 1 µm et ≤ 10.000 µm, préférablement ≥ 10 µm et ≤ 5.000 µm, plus préférablement ≥ 50 µm et ≤ 1.000 µm.

13. Dispositif d'affichage (10) selon l'une quelconque des revendications précédentes, dans lequel le dispositif d'affichage (10) comprend un élément de saillie (34), dans lequel l'élément de saillie (34) s'étend à l'extérieur de la surface inférieure (20) de la couche de support arrière (16) et est disposé entre au moins deux éléments fonctionnels superposés (28a, 28b) de la couche fonctionnelle superposée (14).

14. Dispositif d'affichage (10) selon l'une quelconque des revendications 2 à 13, dans lequel la couche avant (12) comprend un polymère couche-avant-couche-support ou mélanges de celui-ci sélectionnés parmi le groupe comprenant polycarbonate (PC), polytéréphtalate d'éthylène (PET), polynaphtalate d'éthylène (PEN), polyfuranoate d'éthylène (PEF), polyester glycolisé ou amorphe, polytéréphtalate d'éthylène glycolisé ou amorphe (PET-G ou A-PET), polytéréphtalate de triméthylène (PTT), polytéréphtalate de butylène (PBT), polyméthacrylate de méthyle (PMMA), polypropylène (PP), polychlorure de vinyle (PVC), triacétate de cellulose (TCA), polyamide (PA), polyimide (PI) ou polyethylène (PE), polyoxyméthylène (POM), polystyrène (PS), polyuréthane (PU), silicone et acrylonitrile butadiène styrène (ABS).

15. Dispositif d'affichage (10) selon l'une quelconque des revendications précédentes, dans lequel le dispositif d'affichage (10) comprend une couche anti-rayure (36) sur une surface supérieure (38) de la couche avant (12), sur une surface supérieure (24) de la couche fonctionnelle (12), ou sur une surface inférieure (20) de la couche de support arrière (16).

16. Dispositif d'affichage (10) selon la revendication 15, dans lequel la couche anti-rayure (36) comprend un polymère de couche anti-rayure ou mélanges de celui-ci sélectionnés dans le groupe comprenant résine acrylique, résines époxy, et polyuréthane.

17. Dispositif d'affichage (10) selon l'une quelconque des revendications précédentes, dans lequel l'élément de barrière à la lumière (32) et la couche de support arrière (16) sont un composant d'un seul tenant.

18. Dispositif d'affichage (10) selon l'une quelconque des revendications précédentes, dans lequel l'élément de barrière à la lumière (32) et la couche de support arrière (16) sont constitués du même matériau, à l'exception que l'élément de barrière à la lumière (32) comprend en outre le pigment, de sorte que la transmission de l'élément de barrière à la lumière (32) pour une lumière ayant une longueur d'onde de 380 nm à 750 nm est inférieure à la transmission de la couche de support arrière (16) pour une lumière ayant une longueur d'onde de 380 nm à 750 nm.

19. Dispositif d'affichage (10) selon l'une quelconque des revendications 1 à 17, dans lequel l'élément de barrière à la lumière (32) et la couche de support arrière (16) sont constitués du même matériau, à l'exception que l'élément de barrière à la lumière (32) comprend en outre les inclusions d'un gaz (40), préférablement sous forme de bulles, de sorte que la transmission de l'élément de barrière à la lumière (32) pour une lumière ayant une longueur d'onde de 380 nm à 750 nm est inférieure à la transmission de la couche de support arrière (16) pour une lumière ayant une longueur d'onde de 380 nm à 750 nm.

20. Dispositif d'affichage (10) selon l'une quelconque des revendications précédentes, dans lequel le pigment est du noir de carbone.

21. Dispositif d'affichage (10) selon l'une quelconque des revendications précédentes, dans lequel l'élément de barrière à la lumière (32) et la couche de support arrière (16) sont basés sur un matériau de couche de support arrière, dans lequel le matériau de couche de support arrière comprend
- un polymère couche-avant-couche-support ou mélanges de celui-ci sélectionnés parmi le groupe comprenant polycarbonate (PC), polytéréphtalate d'éthylène (PET), polynaphtalate d'éthylène (PEN), polyfuranoate d'éthylène (PEF), polyester glycolisé ou amorphe, polytéréphtalate d'éthylène glycolisé ou amorphe (PET-G ou A-PET), polytéréphtalate de triméthylène (PTT), polytéréphtalate de butylène (PBT), polyméthacrylate de méthyle (PMMA), polypropylène (PP), polychlorure de vinyle (PVC), triacétate de cellulose (TCA), polyamide (PA), polyimide (PI) ou polyethylène (PE), polyoxyméthylène (POM), polystyrène (PS), polyuréthane (PU), silicone et acrylonitrile butadiène styrène (ABS).
- optionnellement un additif absorbeur de laser ou mélanges de ceux-ci,
et
- optionnellement un pigment/source de gaz ou mélanges de ceux-ci.

22. Dispositif d'affichage (10) selon l'une quelconque des revendications précédentes, dans lequel l'élément de barrière à la lumière (32) est basé sur le matériau de couche de support arrière, et comprend en outre le pigment et/ou les inclusions de gaz (40) ou mélanges de ceux-ci.

23. Dispositif d'affichage (10) selon l'une quelconque des revendications précédentes, dans lequel l'élément de barrière à la lumière (32) et la couche de support arrière (16) ont été fabriqués à partir d'un matériau de couche de support arrière primaire d'un dispositif d'affichage vierge n'ayant pas d'élément de barrière à la lumière, dans lequel le matériau de couche de support arrière primaire comprend
- un polymère couche-avant-couche-support ou mélanges de celui-ci sélectionnés parmi le groupe comprenant polycarbonate (PC), polytéréphtalate d'éthylène (PET), polynaphtalate d'éthylène (PEN), polyfuranoate d'éthylène (PEF), polyester glycolisé ou amorphe, polytéréphtalate d'éthylène glycolisé ou amorphe (PET-G ou A-PET), polytéréphtalate de triméthylène (PTT), polytéréphtalate de butylène (PBT), polyméthacrylate de méthyle (PMMA), polypropylène (PP), polychlorure de vinyle (PVC), triacétate de cellulose (TCA), polyamide (PA), polyimide (PI) ou polyethylène (PE), polyoxyméthylène (POM), polystyrène (PS), polyuréthane (PU), silicone et acrylonitrile butadiène styrène (ABS).
- optionnellement un additif absorbeur de laser ou mélanges de ceux-ci,
et
- optionnellement un pigment/source de gaz ou mélanges de ceux-ci.

24. Dispositif d'affichage (10) selon la revendication 23, dans lequel le matériau de couche de support arrière primaire comprend
- 0-5 pds%, préférablement 0,0002-4 pds%, plus préférablement 0,0005-3 pds%, de l'additif absorbeur de laser ou mélange de ceux-ci,
- 0-5 pds%, préférablement 1-4 pds%, plus préférablement 2-3 pds%, du pigment/source de gaz ou mélange de ceux-ci, et
- 90-100 pds%, préférablement 92-98 pds%, plus préférablement 94-96 pds%, du polymère couche-avant-couche-support ou mélanges de celui-ci.

25. Dispositif d'affichage (10) selon l'une quelconque des revendications précédentes, dans lequel la couche fonctionnelle et/ou les éléments fonctionnels (28) sont basés sur un matériau de couche fonctionnelle, dans lequel le matériau de couche fonctionnelle comprend un agent colorant ou mélanges de ceux-ci.

26. Procédé de fabrication d'un dispositif d'affichage (10) comprenant les étapes de
a) la fourniture d'un dispositif d'affichage vierge, dans lequel le dispositif d'affichage vierge comprend
au moins une couche fonctionnelle (14),
au moins une couche de support arrière (16), et
dans lequel la couche fonctionnelle (14) est juxtaposée à la couche de support arrière (16),
dans lequel une surface supérieure (18) de la couche de support arrière (16) est opposée à une surface inférieure (20) de la couche de support arrière (16) et est en contact avec une surface inférieure (22) de la couche fonctionnelle (14),
dans laquelle la couche fonctionnelle (14) comprend au moins deux éléments fonctionnels (28a, 28b), qui transmettent la lumière visible et peuvent être illuminés par au moins une source de lumière (30),
dans lequel la couche de support arrière transmet la lumière visible,
dans lequel la couche de support arrière (16) est basée sur un matériau de couche de support arrière primaire
b) la production d'au moins un élément de barrière à la lumière (32) dans la couche de support arrière (16), par irradiation d'une section de la couche de support arrière (16) où l'élément de barrière à la lumière (32) doit être généré par lumière laser, dans lequel la lumière laser a une longueur d'onde telle que la lumière laser est au moins partiellement absorbée par le matériau de couche de support arrière primaire.

27. Procédé selon la revendication 26, dans lequel dans l'étape a), le matériau de couche de support arrière primaire de la couche de support arrière du dispositif d'affichage vierge comprend
- un polymère couche-avant-couche-support ou mélanges de celui-ci sélectionnés parmi le groupe comprenant polycarbonate (PC), polytéréphtalate d'éthylène (PET), polynaphtalate d'éthylène (PEN), polyfuranoate d'éthylène (PEF), polyester glycolisé ou amorphe, polytéréphtalate d'éthylène glycolisé ou amorphe (PET-G ou A-PET), polytéréphtalate de triméthylène (PTT), polytéréphtalate de butylène (PBT), polyméthacrylate de méthyle (PMMA), polypropylène (PP), polychlorure de vinyle (PVC), triacétate de cellulose (TCA), polyamide (PA), polyimide (PI) ou polyethylène (PE), polyoxyméthylène (POM), polystyrène (PS), polyuréthane (PU), silicone et acrylonitrile butadiène styrène (ABS).
- optionnellement un additif absorbeur de laser ou mélanges de ceux-ci,
et
- optionnellement un pigment/source de gaz ou mélanges de ceux-ci.

28. Procédé selon la revendication 26 ou la revendication 27, dans lequel dans l'étape a), le matériau de couche de support arrière primaire de la couche de support arrière du dispositif d'affichage vierge comprend
- 0-5 pds%, préférablement 0,0002-4 pds%, plus préférablement 0,0005-3 pds%, de l'additif absorbeur de laser ou mélange de ceux-ci,
- 0-5 pds%, préférablement 1-4 pds%, plus préférablement 2-3 pds%, du pigment/source de gaz ou mélange de ceux-ci, et
- 90-100 pds%, préférablement 92-98 pds%, plus préférablement 94-96 pds%, du polymère couche-avant-couche-support ou mélanges de celui-ci.

29. Procédé selon l'une quelconque des revendications 26 à 28 dans lequel dans l'étape a) le matériau de couche de support arrière primaire de la couche de support arrière du dispositif d'affichage vierge comprend un additif absorbeur de laser ou mélange de ceux-ci et optionnellement un pigment/source de gaz ou mélanges de ceux-ci,
et dans l'étape b) la lumière laser a une longueur d'onde telle que la lumière laser est au moins partiellement absorbée par l'additif absorbeur de laser.

30. Procédé selon l'une quelconque des revendications 26 à 29 dans lequel le dispositif d'affichage vierge dans l'étape a) est fabriqué par moulage par insertion de film, décoration dans le moule, étiquetage dans le moule, laminage, surmoulage, moulage par injection à plusieurs composants, et/ou un procédé d'empilement des couches.

31. Procédé selon l'une quelconque des revendications 26 à 30 dans lequel dans l'étape b) l'irradiation de la section de la couche de support arrière (16) où l'élément de barrière à la lumière (32) doit être généré par laser comprend la focalisation d'une lumière laser à partir d'une ou plusieurs sources sur un premier point dans la section de la couche de support arrière (16) où l'élément de barrière à la lumière (32) doit être généré.
